(19) Europäisches Patentamt
European Patent Office
Office européen des brevets

(11) **EP 4 389 828 B1**

(12) **EUROPÄISCHE PATENTSCHRIFT**

(45) Veröffentlichungstag und Bekanntmachung des Hinweises auf die Patenterteilung:
**03.12.2025  Patentblatt 2025/49**

(21) Anmeldenummer: **23205532.7**

(22) Anmeldetag: **24.10.2023**

(51) Internationale Patentklassifikation (IPC):
**C09C 1/00** (2006.01)

(52) Gemeinsame Patentklassifikation (CPC):
**C09C 1/0024; C09C 1/0021;** C01P 2002/52; C01P 2006/40; C01P 2006/62; C01P 2006/63; C01P 2006/64; C09C 2200/1004; C09C 2200/102; C09C 2200/205; C09C 2200/302; C09C 2200/401; C09C 2200/402; C09C 2220/106

(54) **EFFEKTPIGMENTE MIT MINDESTENS EINER TIO2-SCHICHTT, IN DER DAS TIO2 MIT TI(3+) UND FLUORID DOTIERT IST.**

EFFECT PIGMENTS WITH AT LEAST ONE TIO2 LAYER, IN WHICH THE TIO2 IS DOPED WITH TI(3+) AND FLUORIDE.

PIGMENTS À EFFET AVEC AU MOINS UNE COUCHE DE TIO2, DANS LAQUELLE LE TIO2 EST DOPÉ AVEC DU TI(3+) ET DU FLUORURE.

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **19.12.2022  EP 22214502**

(43) Veröffentlichungstag der Anmeldung:
**26.06.2024  Patentblatt 2024/26**

(73) Patentinhaber: SUSONITY Commercial GmbH
**64579 Gernsheim (DE)**

(72) Erfinder:
• **Bauer, Johann**
**64293 DARMSTADT (DE)**
• **Heyland, Andrea**
**64293 DARMSTADT (DE)**

(74) Vertreter: **Weckenbrock, Matthias**
**Dr. Müller Patentanwälte**
**Mühlstraße 9a**
**65597 Hünfelden (DE)**

(56) Entgegenhaltungen:
**WO-A1-93/19131    US-A- 4 623 396**

**Beschreibung**

Die vorliegende Erfindung betrifft deckende mit Fluorid dotierte Effektpigmente mit einem Metallglanz basierend auf plättchenförmigen Substraten sowie ein Verfahren zur Herstellung dieser Pigmente sowie deren Verwendung, insbesondere in Autolacken und kosmetischen Formulierungen.

Im Automobilbereich, bei der Einfärbung von Kunststoffen, in der Kosmetik aber auch im Druckbereich werden zunehmend Effektpigmente eingesetzt, die den damit pigmentierten Produkten einen besonderen Glanz oder besondere Farbeffekt verleihen sollen. In der Regel handelt es sich bei den Effektpigmenten um Substrate, z.B. aus Metallen, Glimmer oder synthetischen Plättchen aus $SiO_2$, Glas oder $Al_2O_3$, die mit einer oder mehreren Schichten, z.B. aus Metallen oder Metalloxiden beschichtet sind. Insbesondere Metalloxide sind häufig verwendete Schichtmaterialien, da sie durch Auffällung auf die Substrate aufgebracht werden können und chemisch weitestgehend inert sind.

Pigmente mit neuen und interessanten Farbeffekten werden u.a. durch die Reduktion von Metalloxidschichten bei Interferenzpigmenten erhalten. Bei den eingesetzten Reduktionsmitteln handelt es sich vorzugsweise um Wasserstoff, Ammoniak, Kohlenstoff, Kohlenmonoxid, Kohlenwasserstoffe, Nichtmetallhydride, wie z.B. $NaBH_4$, oder Metalle.

So wird beispielsweise in der WO 93/19131 die reduktive Glühung von mit $TiO_2$ beschichteten plättchenförmigen Substraten mit festen Reduktionsmitteln in nichtoxidierender Atmosphäre beschrieben. Dabei entsteht ein Schichtaufbau der zum Substrat hin graduell mehr Ti-Oxide und nach außen graduell mehr Atome der eingesetzten Reduktionsmittel enthält, sofern die Reduktionsmittel in die Titanoxid-Struktur integriert werden können oder sich an den Korngrenzen der Titanoxid-Kristallite aufhalten.

Aus der U.S. 4,623,396 ist die Reduktion von $TiO_2$-Glimmerpigmenten in Gegenwart von reduzierenden Gasgemischen bekannt, wobei Glimmerplättchen mit zwei übereinanderliegenden und aus Titanverbindungen bestehenden Schichten überzogen sind, wobei die zweite und auf der ersten Schicht befindliche Schicht aus $TiO_2$ besteht und die erste und unmittelbar auf den Glimmerteilchen befindliche Schicht aus einer Titanverbindung, wie z.B. niedrige Titanoxide, Titanoxynitrid, oder einer Mischung aus Titanverbindungen mit $TiO_2$, beseht. Die äußere $TiO_2$-Schicht entsteht durch nachträgliches Erhitzen unter oxidierenden Bedingungen, so dass von außen her eine Schicht aus $TiO_2$ auf dem $TiO_{2-x}$ entsteht.

Ein wesentlicher Nachteil der aus dem Stand der Technik bekannten Effektpigmente hergestellt unter Reduktionsbedingungen sind die inhomogenen Glühergebnisse und damit die Reproduzierbarkeit der Pigmente. Ein weiterer Nachteil ist der Einsatz von festen Reduktionsmitteln, was zu einer Verunreinigung der damit reduzierten Schicht führt, und unerwünschte Veränderungen der eigentlich gewünschten Farbeffekte hervorruft. Auch die Reduktion mit Metallen ist nachteilig, weil auf diese Weise eine zusätzliche Komponente in die Beschichtung mit eingebracht wird, die ebenfalls zu unerwünschten Veränderungen der Eigenschaften der Pigmente führen kann.

Aufgabe der vorliegenden Erfindung ist es daher reproduzierbare deckende Effektpigmente mit Metallglanz herzustellen, die die oben genannten Nachteile nicht aufweisen, und gleichzeitig transparent sind für elektromagnetische Strahlung.

Überraschenderweise wurde gefunden das Effektpigmente enthaltend mindestens eine mit Fluorid dotierte reduzierend geglühte Titandioxid-Schicht einen Metallglanz aufweisen und im Gegensatz zu Aluminium - Pigmenten transparent sind für elektromagnetische Strahlung. Die erfindungsgemäßen Pigmente lassen sich leicht und reproduzierbar herstellen und besitzen im Vergleich zu den Ausgangspigmenten ein deutlich erhöhtes Deckvermögen.

Gegenstand der vorliegenden Erfindung ist ein Effektpigment basierend auf einem plättchenförmigen Substrat, dadurch gekennzeichnet, dass es mindestens eine $TiO_2$-Schicht enthält, in der das $TiO_2$ mit $Ti^{III+}$ und Fluorid dotiert ist.

Die erfindungsgemäßen Effektpigmente zeigen eine dunklere Körperfarbe als die Ausgangspigmente und einen meist bläulichen Metallglanz und sind transparent für elektromagnetische Strahlung.

Gegenstand der Erfindung ist auch die Verwendung der erfindungsgemäßen Pigmente in Farben, Pulverlacken, Lacken, insbesondere Autolacken und radartransparenten Lackierungen und elektrostatisch ableitfähigen Formulierungen, in Druckfarben, Sicherheitsdruckfarben, Kunststoffen, als Absorber für die Lasermarkierung und das Laserschweißen, in kosmetischen Formulierungen und insbesondere für Hochtemperaturanwendungen, wie z.B. zur Pigmentierung von Glasuren und Keramiken. Weiterhin sind die erfindungsgemäßen Pigmente auch zur Herstellung von Pigmentpräparationen sowie zur Herstellung von Trockenpräparaten, wie z.B. keramischen Farben, Granulate, Chips, Pellets, Briketts, etc., geeignet.

Geeignete Basissubstrate für die erfindungsgemäßen Effektpigmente sind semitransparente und transparente plättchenförmige Substrate. Bevorzugte Substrate sind Schichtsilikatplättchen, SiC-, TiC-, WC-, $B_4C$-, BN-, Graphit-, $TiO_2$- und $Fe_2O_3$-Plättchen, dotierte oder undotierte $Al_2O_3$-Plättchen, dotierte oder undotierte Glasplättchen, dotierte oder undotierte $SiO_2$-Plättchen, $TiO_2$-Plättchen, BiOCl und deren Gemische. Aus der Gruppe der Schichtsilikate sind insbesondere bevorzugt natürliche und synthetische Glimmerplättchen, Muskovit, Talk und Kaolin. Als synthetischer Glimmer findet vorzugsweise Fluorophlogopit oder Zn-Phlogopit als Substrat Anwendung. Die erfindungsgemäßen Pigmente basieren vorzugsweise auf Substraten ausgewählt aus der Gruppe synthetische oder natürliche Glimmerplättchen, Schichtsilikate, Glasplättchen, Borosilikatplättchen, $SiO_2$-Plättchen, $Al_2O_3$-Plättchen, $TiO_2$-Plättchen, Gra-

phit-Plättchen, und/oder BiOCI-Plättchen.

Die Glasplättchen können aus allen dem Fachmann bekannten Glasarten bestehen, sofern sie im angewendeten Brennbereich temperaturstabil sind. Geeignete Gläser sind z.B. Quarzglas, A-Glas, E-Glas, C-Glas, ECR-Glas, Altglas, Alkaliboratglas, Alkalisilikatglas, Borosilikatglas, Duran®-Glas, Laborgeräteglas oder optisches Glas.

Der Brechungsindex der Glasplättchen liegt vorzugsweise bei 1,45-1,80, insbesondere bei 1,50-1,70. Besonders bevorzugt bestehen die Glassubstrate aus C-Glas, ECR-Glas oder Borosilikatglas.

Synthetische Substratplättchen, wie z.B. Glasplättchen, $SiO_2$-Plättchen, $Al_2O_3$-Plättchen, können dotiert oder undotiert sein. Sofern sie dotiert sind, handelt es sich bei der Dotierung vorzugsweise um Al, N, B, Ti, Zr, Si, In, Sn, oder Zn bzw. deren Gemische. Ferner können weitere Ionen aus der Gruppe der Übergangsmetalle (V, Cr, Mn, Fe, Co, Ni, Cu, Y, Nb, Mo, Hf, Sb, Ta, W) und Ionen aus der Gruppe der Lanthaniden als Dotierstoffe dienen.

Im Falle von $Al_2O_3$ ist das Substrat vorzugsweise undotiert oder mit $TiO_2$, $ZrO_2$ oder ZnO dotiert. Bei den $Al_2O_3$-Plättchen handelt es sich vorzugsweise um Korund. Geeignete $Al_2O_3$-Plättchen sind vorzugsweise dotierte oder undotierte $\alpha$-$Al_2O_3$-Plättchen, insbesondere mit $TiO_2$ oder $ZrO_2$ dotierte $\alpha$-$Al_2O_3$-Plättchen.

Sofern das Substrat dotiert ist, beträgt der Anteil der Dotierung vorzugsweise 0,01 - 5 Gew.%, insbesondere 0,1 - 3 Gew.% bezogen auf das Substrat.

Die Größe der Basissubstrate ist an sich nicht kritisch und kann auf den jeweiligen Anwendungszweck abgestimmt werden. In der Regel haben die plättchenförmigen Substrate eine Dicke zwischen 0,05 und 5 $\mu$m, insbesondere zwischen 0,1 und 4,5 $\mu$m.

Es können auch Substrate unterschiedlicher Partikelgrößen eingesetzt werden. Besonders bevorzugt ist ein Gemisch aus Glimmerfraktionen von N-Glimmer (10-60 $\mu$m), F-Glimmer (5-20 $\mu$m) und/oder M-Glimmer (<15 $\mu$m). Weiterhin bevorzugt sind N- und S-Fraktionen (10-130 $\mu$m) und F- und S-Fraktionen (5-130 $\mu$m).

Typische Beispiele für Teilchengrößenverteilungen (gemessen mit Malvern Mastersizer 3000):

$D_{10}$: 1 - 50 $\mu$m, insbesondere 2 - 45 $\mu$m, ganz besonders bevorzugt 5-40 $\mu$m

$D_{50}$: 7 - 275 $\mu$m, insbesondere 10 - 200 $\mu$m, ganz besonders bevorzugt 15-150 $\mu$m

$D_{50}$: 15 - 500 $\mu$m, insbesondere 25 - 400 $\mu$m, ganz besonders bevorzugt 50-200 $\mu$m.

In dieser Patentanmeldung bedeutet "hochbrechend" ein Brechungsindex von $\geq$ 1,8, während "niedrigbrechend" ein Brechungsindex von < 1,8 bedeutet.

Die plättchenförmigen Substrate sind vorzugsweise mit ein oder mehreren Schichten, komplett umhüllt.

In einer bevorzugten Ausführungsform kann der Träger des Effektpigments mit einer oder mehreren transparenten semitransparenten und/oder opaken Schichten enthaltend Metalloxide, Metalloxidhydrate, Metallsuboxide, Metalle, Metallfluoride, Metallnitride, Metalloxynitride oder Mischungen dieser Materialien beschichtet sein. Die Metalloxid-, Metalloxidhydrat-, Metallsuboxid-, Metall-, Metallfluorid-, Metallnitrid-, Metalloxynitridschichten oder die Mischungen hieraus können niedrig- (Brechzahl < 1,8) oder hochbrechend (Brechzahl $\geq$ 1,8) sein. Als Metalloxide und Metalloxidhydrate eignen sich alle dem Fachmann bekannten Metalloxide oder Metalloxidhydrate, wie z. B. Aluminiumoxid, Aluminiumoxidhydrat, Siliziumoxid, Siliziumoxidhydrat, Eisenoxid, Zinnoxid, Ceroxid, Zinkoxid, Zirkoniumoxid, Chromoxid, Titanoxid, insbesondere Titandioxid, Titanoxidhydrat sowie Mischungen hieraus, wie z.B. Fe-Ti-Mischoxide. Als Metallsuboxide können beispielsweise die Titansuboxide eingesetzt werden. Als Metallfluorid eignet sich beispielsweise Magnesiumfluorid. Als Metallnitride oder Metalloxynitride können beispielsweise die Nitride oder Oxynitride der Metalle Titan, Silizium, Zirkonium und/oder Tantal eingesetzt werden. Bevorzugt werden Metalloxid-, Metall-, Metallfluorid und/oder Metalloxidhydratschichten und ganz besonders bevorzugt Metalloxid- und/oder Metalloxidhydratschichten auf den Träger aufgebracht. Weiterhin können auch Mehrschichtaufbauten aus hoch- und niedrigbrechenden Metalloxid-, Metalloxidhydrat-, Metall- oder Metallfluoridschichten vorliegen, wobei sich vorzugsweise hoch- und niedrigbrechende Schichten abwechseln. Insbesondere bevorzugt sind Schichtpakete aus einer hoch- und einer niedrigbrechenden Schicht, wobei auf dem Träger eine oder mehrere dieser Schichtpakete aufgebracht sein können. Die Reihenfolge der hoch- und niedrigbrechenden Schichten kann dabei an den Träger angepasst werden, um den Träger in den Mehrschichtaufbau mit einzubeziehen. In einer weiteren Ausführungsform können die Metalloxid-, Metallsilikat-, Metalloxidhydrat-, Metallsuboxid-, Metall-, Metallfluorid-, Metallnitrid-, Metalloxynitrid-Schichten mit Farbmitteln versetzt oder dotiert sein, sofern sie bei dem Reduktionsprozess stabil sind.

Bei einer hochbrechenden Schicht mit einem Brechungsindex von n $\geq$ 1,8, vorzugsweise n $\geq$ 2,0 handelt es sich vorzugsweise um Metalloxide ausgewählt aus der Gruppe $TiO_2$, $ZrO_2$, ZnO, $SnO_2$, $Cr_2O_3$, $Ce_2O_3$, BiOCl, $Fe_2O_3$, $Fe_3O_4$, FeO(OH), Ti-Suboxiden ($TiO_2$ teilweise reduziert mit Oxidationszahlen von <4 bis 2 und niedere Oxide wie z.B. $Ti_3O_5$, $Ti_2O_3$ bis zu TiO), Titanoxynitride sowie Titannitrid, Erdalkalititanate $MTiO_3$ (M = Ca, Sr, Ba), CoO, $Co_2O_3$, $Co_3O_4$, $VO_2$, $V_2O_2$, NiO, $WO_3$, MnO, $Mn_2O_3$ oder Gemische der genannten Oxide.

Bei einer niedrigbrechenden Schicht mit einem Brechungsindex von n < 1,8, vorzugsweise n < 1,7, handelt es sich vorzugsweise um Metalloxide ausgewählt aus der Gruppe $SiO_2$, $MgO*SiO_2$, $CaO*SiO_2$, $Al_2O_3*SiO_2$, $B_2O_3*SiO_2$ oder aus einem Gemisch der genannten Verbindungen. Weiterhin kann die Silikatschicht mit weiteren Erdalkali- oder Alkaliionen dotiert sein.

Als Farbmittel oder andere Elemente eignen sich beispielsweise anorganische Farbpigmente wie farbige Metalloxide, z.B. Magnetit, Chrom-(III)-oxid oder Farbpigmente, wie z.B. Thenards Blau (ein Co-Al-Spinell) oder Elemente, wie z.B. Yttrium oder Antimon, sowie generell Pigmente aus der Struktur-Klasse der Perowskite, Pyrochlore, Rutile und Spinelle, sofern sie bei den Reduktionstemperaturen stabil sind. Perlglanzpigmente enthaltend diese Schichten zeigen eine hohe Farbenvielfalt in Bezug auf ihre Körperfarbe und können in vielen Fällen eine winkelabhängige Änderung der Farbe (Farbflop) durch Interferenz zeigen.

Die Dicke der Metalloxid-, Metalloxidhydrat-, Metallsuboxid-, Metall-, Metallfluorid-, Metallnitrid-, Metalloxynitridschichten oder einer Mischung daraus, beträgt auf dem Trägersubstrat üblicherweise 3 bis 1000 nm und im Falle der Metalloxid-, Metalloxidhydrat-, Metallsuboxid-, Metallfluorid-, Metallnitrid-, Metalloxynitridschichten oder einer Mischung daraus vorzugsweise 20 bis 200 nm.

Alle dem Fachmann bekannten Effektpigmente basierend auf plättchenförmigen Substraten enthaltend ein oder mehrere Schichten, vorzugsweise Metalloxidschichten, sind geeignet, sofern sie mindestens eine Titandioxid-Schicht aufweisen, vorzugsweise mit einer Schichtdicke von 20 - 500 nm, insbesondere 30 - 200 nm und ganz besonders bevorzugt von 40 - 60 nm. Vorzugsweise handelt es sich bei der $TiO_2$-Schicht um die äußere Schicht auf dem Basissubstrat. Für die erfindungsgemäßem Effektpigmente können aber auch alle im Handel erhältlichen Effektpigmente eingesetzt werden, sofern sie mindestens eine $TiO_2$-Schicht aufweisen, insbesondere eine äußere $TiO_2$-Schicht.

Die $TiO_2$-Schicht kann sowohl in der Rutil- als auch in der Anatasmodifikation vorliegen. Vorzugsweise liegt die $TiO_2$-Schicht in der Rutilmodifikation vor. In einer weiteren Ausführungsform kann die $TiO_2$-Schicht zusätzlich auch dotiert sein, z.B. mit Niob, Zirkon, Magnesium, Calcium, Strontium, Barium, Zink, Indium, Zinn, Antimon.

Besonders bevorzugte Basispigmente für die Fluorid-Dotierung der $TiO_2$-Schicht unter milden Reduktionsbedingungen besitzen folgenden Aufbau:

- Substrat + $TiO_2$
- Substrat + $SnO_2$ + $TiO_2$
- Substrat + $TiO_2$ + $SiO_2$ + $TiO_2$
- Substrat + $SnO_2$ + $TiO_2$ + $SiO_2$ + $SnO_2$ + $TiO_2$
- Substrat + $TiO_2$ + $MgO$ + $TiO_2$
- Substrat + $SnO_2$ + $TiO_2$ + $MgO$ + $SnO_2$ + $TiO_2$
- Substrat + $TiO_2$ + $CaO$ + $TiO_2$
- Substrat + $SnO_2$ + $TiO_2$ + $CaO$ + $SnO_2$ + $TiO_2$
- Substrat + $TiO_2$ + $SrO$ + $TiO_2$
- Substrat + $SnO_2$ + $TiO_2$ + $SrO$ + $SnO_2$ + $TiO_2$
- Substrat + $TiO_2$ + $BaO$ + $TiO_2$
- Substrat + $SnO_2$ + $TiO_2$ + $BaO$ + $SnO_2$ + $TiO_2$
- Substrat + $TiO_2$ + $ZnO$ + $TiO_2$
- Substrat + $SnO_2$ + $TiO_2$ + $ZnO$ + $SnO_2$ + $TiO_2$

Ganz besonders bevorzugte Basispigmente besitzen folgenden Schichtaufbau:

- natürliche Glimmerplättchen + $TiO_2$
- natürliche Glimmerplättchen + $SnO_2$ + $TiO_2$
- natürliche Glimmerplättchen + $TiO_2$ + $SiO_2$ + $TiO_2$
- natürliche Glimmerplättchen + $SnO_2$ + $TiO_2$ + $SiO_2$ + $SnO_2$ + $TiO_2$
- natürliche Glimmerplättchen + $TiO_2$ + $MgO$ + $TiO_2$
- natürliche Glimmerplättchen + $SnO_2$ + $TiO_2$ + $MgO$ + $SnO_2$ + $TiO_2$
- natürliche Glimmerplättchen + $TiO_2$ + $CaO$ + $TiO_2$
- natürliche Glimmerplättchen + $SnO_2$ + $TiO_2$ + $CaO$ + $SnO_2$ + $TiO_2$
- natürliche Glimmerplättchen + $TiO_2$ + $SrO$ + $TiO_2$
- natürliche Glimmerplättchen + $SnO_2$ + $TiO_2$ + $SrO$ + $SnO_2$ + $TiO_2$
- natürliche Glimmerplättchen + $TiO_2$ + $BaO$ + $TiO_2$
- natürliche Glimmerplättchen + $SnO_2$ + $TiO_2$ + $BaO$ + $SnO_2$ + $TiO_2$
- natürliche Glimmerplättchen + $TiO_2$ + $ZnO$ + $TiO_2$
- natürliche Glimmerplättchen + $SnO_2$ + $TiO_2$ + $ZnO$ + $SnO_2$ + $TiO_2$
- synthetische Glimmerplättchen + $TiO_2$
- synthetische Glimmerplättchen + $SnO_2$ + $TiO_2$
- synthetische Glimmerplättchen + $TiO_2$ + $SiO_2$ + $TiO_2$
- synthetische Glimmerplättchen + $SnO_2$ + $TiO_2$ + $SiO_2$ + $SnO_2$ + $TiO_2$

- synthetische Glimmerplättchen + $TiO_2$ + MgO + $TiO_2$
- synthetische Glimmerplättchen + $SnO_2$ + $TiO_2$ + MgO + $SnO_2$ + $TiO_2$
- synthetische Glimmerplättchen + $TiO_2$ + CaO + $TiO_2$
- synthetische Glimmerplättchen + $SnO_2$ + $TiO_2$ + CaO + $SnO_2$ + $TiO_2$
- synthetische Glimmerplättchen + $TiO_2$ + SrO + $TiO_2$
- synthetische Glimmerplättchen + $SnO_2$ + $TiO_2$ + SrO + $SnO_2$ + $TiO_2$
- synthetische Glimmerplättchen + $TiO_2$ + BaO + $TiO_2$
- synthetische Glimmerplättchen + $SnO_2$ + $TiO_2$ + BaO + $SnO_2$ + $TiO_2$
- synthetische Glimmerplättchen + $TiO_2$ + ZnO + $TiO_2$
- synthetische Glimmerplättchen + $SnO_2$ + $TiO_2$ + ZnO + $SnO_2$ + $TiO_2$
- $SiO_2$-Plättchen + $TiO_2$
- $SiO_2$-Plättchen + $SnO_2$ + $TiO_2$
- $SiO_2$-Plättchen + $TiO_2$ + $SiO_2$ + $TiO_2$
- $SiO_2$-Plättchen + $SnO_2$ + $TiO_2$ + $SiO_2$ + $SnO_2$ + $TiO_2$
- $SiO_2$-Plättchen + $TiO_2$ + MgO + $TiO_2$
- $SiO_2$-Plättchen + $SnO_2$ + $TiO_2$ + MgO + $SnO_2$ + $TiO_2$
- $SiO_2$-Plättchen + $TiO_2$ + CaO + $TiO_2$
- $SiO_2$-Plättchen + $SnO_2$ + $TiO_2$ + CaO + $SnO_2$ + $TiO_2$
- $SiO_2$-Plättchen + $TiO_2$ + SrO + $TiO_2$
- $SiO_2$-Plättchen + $SnO_2$ + $TiO_2$ + SrO + $SnO_2$ + $TiO_2$
- $SiO_2$-Plättchen + $TiO_2$ + BaO + $TiO_2$
- $SiO_2$-Plättchen + $SnO_2$ + $TiO_2$ + BaO + $SnO_2$ + $TiO_2$
- $SiO_2$-Plättchen + $TiO_2$ + ZnO + $TiO_2$
- $SiO_2$-Plättchen + $SnO_2$ + $TiO_2$ + ZnO + $SnO_2$ + $TiO_2$
- $Al_2O_3$-Plättchen + $TiO_2$
- $Al_2O_3$-Plättchen + $SnO_2$ + $TiO_2$
- $Al_2O_3$-Plättchen + $TiO_2$ + $SiO_2$ + $TiO_2$
- $Al_2O_3$-Plättchen + $SnO_2$ + $TiO_2$ + $SiO_2$ + $SnO_2$ + $TiO_2$
- $Al_2O_3$-Plättchen + $TiO_2$ + MgO + $TiO_2$
- $Al_2O_3$-Plättchen + $SnO_2$ + $TiO_2$ + MgO + $SnO_2$ + $TiO_2$
- $Al_2O_3$-Plättchen + $TiO_2$ + CaO + $TiO_2$
- $Al_2O_3$-Plättchen + $SnO_2$ + $TiO_2$ + CaO + $SnO_2$ + $TiO_2$
- $Al_2O_3$-Plättchen + $TiO_2$ + SrO + $TiO_2$
- $Al_2O_3$-Plättchen + $SnO_2$ + $TiO_2$ + SrO + $SnO_2$ + $TiO_2$
- $Al_2O_3$-Plättchen + $TiO_2$ + BaO + $TiO_2$
- $Al_2O_3$-Plättchen + $SnO_2$ + $TiO_2$ + BaO + $SnO_2$ + $TiO_2$
- $Al_2O_3$-Plättchen + $TiO_2$ + ZnO + $TiO_2$
- $Al_2O_3$-Plättchen + $SnO_2$ + $TiO_2$ + ZnO + $SnO_2$ + $TiO_2$
- Glasplättchen + $TiO_2$
- Glasplättchen + $SnO_2$ + $TiO_2$
- Glasplättchen + $TiO_2$ + $SiO_2$ + $TiO_2$
- Glasplättchen + $SnO_2$ + $TiO_2$ + $SiO_2$ + $SnO_2$ + $TiO_2$
- Glasplättchen + $TiO_2$ + MgO + $TiO_2$
- Glasplättchen + $SnO_2$ + $TiO_2$ + MgO + $SnO_2$ + $TiO_2$
- Glasplättchen + $TiO_2$ + CaO + $TiO_2$
- Glasplättchen + $SnO_2$ + $TiO_2$ + CaO + $SnO_2$ + $TiO_2$
- Glasplättchen + $TiO_2$ + SrO + $TiO_2$
- Glasplättchen + $SnO_2$ + $TiO_2$ + SrO + $SnO_2$ + $TiO_2$
- Glasplättchen + $TiO_2$ + BaO + $TiO_2$
- Glasplättchen + $SnO_2$ + $TiO_2$ + BaO + $SnO_2$ + $TiO_2$
- Glasplättchen + $TiO_2$ + ZnO + $TiO_2$
- Glasplättchen + $SnO_2$ + $TiO_2$ + ZnO + $SnO_2$ + $TiO_2$

"$TiO_2$" bedeutet eine dotierte oder eine undotierte $TiO_2$-Schicht. Vorzugsweise ist die $TiO_2$-Schicht undotiert. Besonders bevorzugt handelt es sich um eine undotierte Rutilschicht.

Die Metalloxidschicht(en) werden vorzugsweise nasschemisch auf die Substratplättchen aufgebracht, wobei die zur Herstellung von Perlglanzpigmenten entwickelten nasschemischen Beschichtungsverfahren angewendet werden können; Derartige Verfahren sind z. B. beschrieben in U.S. 3087828, U.S. 3087829, U.S. 3553001, DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017, DE 196 18 568, EP 0 659 843, oder auch in weiteren dem Fachmann bekannten Patentdokumenten und sonstigen Publikationen.

Bei der Nassbeschichtung werden die Substratplättchen in Wasser suspendiert und mit einem oder mehreren hydrolysierbaren Metallsalzen bei einem für die Hydrolyse geeigneten pH-Wert versetzt, der so gewählt wird, dass die Metalloxide bzw. Metalloxidhydrate direkt auf den Plättchen ausgefällt werden, ohne dass es zu Nebenfällungen kommt. Der pH-Wert wird üblicherweise durch gleichzeitiges Zudosieren einer Base und/oder Säure konstant gehalten. Anschließend werden die Effektpigmente abgetrennt, gewaschen und getrocknet und gegebenenfalls geglüht, wobei die Glühtemperatur im Hinblick auf die jeweils vorliegende Beschichtung optimiert werden kann. In der Regel liegen die Glühtemperaturen zwischen 250 und 1000 °C, vorzugsweise zwischen 350 und 900 °C. Falls gewünscht kann das Pigment nach dem Aufbringen einzelner Beschichtungen abgetrennt, getrocknet und ggf. geglüht werden, um dann zur Auffällung der weiteren Schichten wieder resuspendiert zu werden.

Für das Aufbringen einer $SiO_2$-Schicht wird bevorzugt das in der DE 196 18 569 beschriebene Verfahren verwendet. Zur Herstellung der $SiO_2$-Schicht wird vorzugsweise Natrium- oder Kaliumwasserglaslösung eingesetzt.

Weiterhin kann die Beschichtung auch in einem Wirbelbettreaktor durch Gasphasenbeschichtung erfolgen, wobei z.B. die in EP 0 045 851 und EP 0 106 235 zur Herstellung von Perlglanzpigmenten vorgeschlagenen Verfahren entsprechend angewendet werden können.

Zum Aufbringen von Titandioxid wird bevorzugt das in US 3,553,001 beschriebene Verfahren eingesetzt. Dabei wird zu einer auf etwa 50-100°C, insbesondere 70-80°C erhitzten Suspension der, gegebenenfalls bereits vorbeschichteten, Substrate langsam eine wässrige Lösung eines anorganischen Titansalzes zugegeben und der pH-Wert durch gleichzeitiges Zudosieren einer Base bei 0.5 bis 5, insbesondere etwa 1.5 bis 2.5, weitgehend konstant gehalten. Sobald die gewünschte Schichtdicke des $TiO_2$-Oxidhydrates erreicht ist, wird die Zugabe der Titansalzlösung und der Base gestoppt. Dieses Verfahren wird auch als Titrationsverfahren bezeichnet und weist die Besonderheit auf, dass kein Überschuss an Titansalz vorliegt, sondern pro Zeiteinheit immer nur eine solche Menge bereitgestellt wird, wie für eine gleichmäßige Beschichtung mit dem hydratisierten $TiO_2$ erforderlich ist und auch von der Oberfläche des zu beschichtenden Substrates aufgenommen werden kann. In der Lösung sind daher keine hydratisierten Titandioxidteilchen vorhanden, die nicht auf der zu beschichtenden Oberfläche abgeschieden werden.

Der Farbton der Pigmente kann in weiten Grenzen durch unterschiedliche Wahl der Belegungsmengen bzw. der daraus resultierenden Schichtdicken variiert werden. Die Feinabstimmung für einen bestimmten Farbton kann über die reine Mengenwahl hinaus durch visuell oder messtechnisch kontrolliertes Anfahren der gewünschten Farbe erreicht werden.

Die Fluorid-Dotierung der $TiO_2$-Schicht auf dem Basispigment erfolgt, indem die $TiO_2$-Schicht des Ausgangspigments gleichzeitig in Gegenwart eines Reduktionsmittels und eines Fluorid-Donors bei erhöhten Temperaturen reduziert wird. Sofern das Basispigment mehrere $TiO_2$-Schichten enthält, erfolgt nur in der äußeren $TiO_2$-Schicht der Einbau des Fluorids in das $TiO_2$-Kristallgitter unter reduzierenden Bedingungen. Wird mit Fluorid auf den Anionenpositionen im $TiO_2$ dotiert, induziert dieses positive Ladungszentren in der $TiO_2$-Gitterstruktur, was wiederum die Reduktion von $Ti^{4+}$ zu $Ti^{3+}$ erleichtert, d.h. es werden niedrigere Reduktionstemperaturen benötigt als bei der Reduktion von $Ti^{4+}$ zu $Ti^{3+}$ ohne Anwesenheit eines Fluorid-Donors. Mildere Reduktionsbedingungen erhöhen die Homogenität innerhalb der mit $Ti^{III+}$ und Fluorid dotierten $TiO_2$-Schicht und erhöhen gleichzeitig die Reproduzierbarkeit.

Geeignete Reduktionsmittel sind alle dem Fachmann bekannten festen Reduktionsmittel, wie z. B. Erdalkalimetalle, B, Al, Si, Zn, Fe, LiH, $CaH_2$, $NaBH_4$, $MgSi$, $MgSi_2$, $Ca_2Si$, $CaSi_2$. Vorzugsweise wird als Reduktionsmittel Si eingesetzt. Der Anteil an Reduktionsmittel bezogen auf das Basispigment beträgt vorzugsweise 0,5 - 5 Gew.%, insbesondere 0,8 - 2 Gew.% und ganz besonders bevorzugt 0,9 - 1,2 Gew.%.

Geeignete Fluorid-Donoren sind beispielsweise anorganische Fluoride, wie z. B. $CaF_2$, $MgF_2$, $NaF$, $NH_4F$, fluororganische Verbindungen, wie z. B. Polytetrafluorethylen, natürliche und synthetische fluorhaltige Minerale, wie z. B.. Fluorophlogopit (=synthetischer Glimmer).

Der Anteil an Fluorid-Donoren bezogen auf das Basispigment beträgt vorzugsweise 0,01 - 3 Gew.%, insbesondere 0,01 - 1 Gew.% und ganz besonders bevorzugt 0,03 - 0,3 Gew.%.

Die Reduktionsreaktion und Dotierung erfolgt in einer inertisierenden oder reduzierenden Atmosphäre, wie z.B. $N_2$, Ar, He, $CO_2$, CO, Formiergas (z.B. 95:5 (v/v) $N_2$:$H_2$), $C_xH_y$, $H_2$, wobei $N_2$ oder Ar bevorzugt sind.

Die Reduktion findet vorzugsweise bei Temperaturen von 700 - 1000 °C, vorzugsweise 700 - 950 °C, insbesondere 750 - 850 °C, über einen Zeitraum von mehr als 10 Minuten, bevorzugt 15-60 Minuten statt.

Die Reduktionstemperatur lässt sich weiter senken durch die Anwesenheit von Schmelzsalzen, wie z.B. Alkali-/Erdalkalihalogeniden, wie beispielsweise $CaCl_2$ oder $MgCl_2$. Der Anteil an Schmelzsalzen beträgt vorzugsweise 0,01-5 Gew%, insbesondere 0,01-3 Gew.% und ganz besonders bevorzugt 0,03-1,5 Gew.%, bezogen auf das Basispigment. Allerdings kann die Temperatur nicht beliebig abgesenkt werden, da sie durch den Schmelzpunkt des beigefügten Halogenids begrenzt wird. So schmilzt beispielsweise $CaCl_2$ bei 772 °C und $MgCl_2$ bei 714 °C, d.h. die Reduktionstemperatur muss oberhalb des Schmelzpunktes des Schmelzsalzes liegen.

In einer besonders bevorzugten Ausführungsform findet die Reduktion der Ausgangspigmente mit Si, $CaF_2$ und $CaCl_2$ statt.

Die aus dem Stand der Technik bekannten Reduktionsverfahren unterscheiden sich aber deutlich in der Vorgehensweise von derjenigen gemäß der vorliegenden Erfindung. Der Grad der Dotierung wird so gewählt, dass die finalen Pigmente mindestens ein mit Fluorid dotiertes reduzierend geglühtes Titandioxid der Formel $TiF_yO_{2-x-y}$ enthalten, wobei x und y wie folgt definiert sind:

0,00001 < y < 0,05, bevorzugt 0,0001 < y < 0,01 und besonders bevorzugt 0,001 < y < 0,005 und

0,00001 < x < 0,1, besonders bevorzugt 0,0001 < x < 0,03.

Die $TiO_2$-Kristallstruktur wird durch die Dotierung mit Fluorid und $Ti^{3+}$ nicht verändert, d.h., es liegt kein Titansuboxid vor.

Gegenstand der vorliegenden Erfindung ist auch ein Verfahren zur Herstellung der erfindungsgemäßen Effektpigmente, dass sich dadurch auszeichnet, dass Effektpigmente basierend auf plättchenförmigen Substraten, die mindestens eine $TiO_2$-Schicht aufweisen mit mindestens einem festen Reduktionsmittel in Gegenwart eines Fluorid-Donors und optional mindestens eines Schmelzsalzes, für 15 - 60 min in einer nicht oxidierenden Gasatmosphäre bei Temperaturen von 700 - 900 °C ausgesetzt werden.

Der Grad der Dunkelfärbung durch Reduktion lässt sich sowohl durch den Anteil an Reduktionsmittel als auch durch den Anteil an Fluorid-Donor in der Reaktionsmischung steuern. Letzterer kann aber nicht beliebig erhöht werden.

Zur Erhöhung der Licht-, Wasser- und Wetterstabilität empfiehlt es sich häufig, in Abhängigkeit vom Einsatzgebiet, das erfindungsgemäße Effektpigment einer anorganischen oder organischen Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung wird die chemische und photochemische Stabilität weiter erhöht oder die Handhabung des Effektpigments, insbesondere die Einarbeitung in unterschiedliche Medien erleichtert. Zur Verbesserung der Benetzbarkeit, Dispergierbarkeit und/oder Verträglichkeit mit den Anwendermedien können funktionelle Beschichtungen aus $SiO_2$, $Al_2O_3$ oder $ZrO_2$ oder deren Gemische auf die Pigmentoberfläche aufgebracht werden. Weiterhin sind organische Nachbeschichtungen möglich, z.B. mit Silanen, wie beispielsweise beschrieben in der EP 0090259, EP 0 634 459, WO 99/57204, WO 96/32446, WO 99/57204, U.S. 5,759,255, U.S. 5,571,851, WO 01/92425 oder in J.J. Ponjeé, Philips Technical Review, Vol. 44, No. 3, 81 ff. und P.H. Harding J.C. Berg, J. Adhesion Sci. Technol. Vol. 11 No. 4, S. 471-493. Weitere Beispiele für organische Nachbeschichtungen finden sich z. B. in EP 0 632 109, US 5,759,255, DE 43 17 019, DE 39 29 423, DE 32 35 017, EP 0 492 223, EP 0 342 533, EP 0 268 918, EP 0 141 174, EP 0 764 191, WO 98/13426 oder EP 0 465 805, deren Offenbarung hiermit unter Bezugnahme mit eingeschlossen ist. Pigmente enthaltend eine organische Beschichtung, z.B. aus Organosilanen oder Organotitanaten bzw. Organozirkonaten zeigen neben den bereits genannten optischen Eigenschaften zusätzlich eine erhöhte Stabilität gegenüber Witterungseinflüssen, wie z.B. Feuchtigkeit und Licht, was vor allem für Industrielacke und im Automobilbereich von besonderem Interesse ist. Die Stabilisierung kann durch anorganische Komponenten der zusätzlichen Beschichtung verbessert werden. Die hierbei aufgebrachten Stoffe umfassen lediglich einen Gewichtsanteil von 0,1 bis 5 Gew. %, vorzugsweise 0,5 bis 3 Gew. %, des gesamten Effektpigmentes.

Insgesamt sind die jeweiligen Anteile für die zusätzliche stabilisierende Beschichtung so auszuwählen, dass die optischen Eigenschaften der erfindungsgemäßen Effektpigmente nicht oder nur unwesentlich beeinflusst werden.

Die erfindungsgemäßen Pigmente sind vielseitig einsetzbar. Daher ist die Verwendung von Effektpigmenten gemäß der vorliegenden Erfindung in Kosmetika, Lacken, Pulverlacken, Farben, Kunststoffen, Folien, im Sicherheitsdruck, in Sicherheitsmerkmalen in Dokumenten und Ausweisen, zur Lasermarkierung, als elektrostatisch dissipatives Pigment, zur Saatguteinfärbung, zur Lebensmitteleinfärbung oder in Arzneimittelüberzügen sowie zur Herstellung von Pigmentpräparationen und Trockenpräparaten ebenfalls Gegenstand der vorliegenden Erfindung.

Im Falle von Kosmetika eignen sich die erfindungsgemäßen Effektpigmente besonders für Produkte und Formulierungen der dekorativen Kosmetik, wie z. B. Nagellacke, farbgebende Puder, Lippenstifte oder Lidschatten, Seifen, Zahnpasten etc. Selbstverständlich können die erfindungsgemäßen Effektpigmente in den Formulierungen auch mit jeder Art von kosmetischen Roh- und Hilfsstoffen kombiniert werden. Dazu gehören u. a. Öle, Fette, Wachse, Filmbildner, Konservierungsmittel und allgemein anwendungstechnische Eigenschaften bestimmende Hilfsstoffe, wie z. B. Verdicker und rheologische Zusatzstoffe wie etwa Bentonite, Hektorite, Siliziumdioxid, Ca-Silikate, Gelatine, hochmolekulare Kohlenhydrate und/oder oberflächenaktive Hilfsmittel, etc. Die erfindungsgemäßen Effektpigmente enthaltenden Formulierungen können dem lipophilen, hydrophilen oder hydrophoben Typ angehören. Bei heterogenen Formulierungen mit diskreten wässrigen und nicht-wässrigen Phasen können die erfindungsgemäßen Partikel in jeweils nur einer der beiden Phasen enthalten oder auch über beide Phasen verteilt sein.

Die pH-Werte der wässrigen Formulierungen können zwischen 1 und 14, bevorzugt zwischen 2 und 11 und besonders bevorzugt zwischen 5 und 8 liegen. Den Konzentrationen der erfindungsgemäßen Effektpigmente in der Formulierung sind keine Grenzen gesetzt. Sie können - je nach Anwendungsfall - zwischen 0.001 (rinse-off-Produkte, z. B. Duschgele) und 99 % (z. B. Glanzeffekt-Artikel für besondere Anwendungen) liegen. Die erfindungsgemäßen Effektpigmente können weiterhin auch mit kosmetischen Wirkstoffen kombiniert werden. Geeignete Wirkstoffe sind z. B. Insect Repellents, UV A/B/C-Schutzfilter (z. B. OMC, B3, MBC), Anti-Ageing-Wirkstoffe, Vitamine und deren Derivate (z. B. Vitamin A, C, E etc.), Selbstbräuner (z. B. DHA, Erythrolose u.a.) sowie weitere kosmetische Wirkstoffe wie z. B. Bisabolol, LPO, Ectoin, Emblica, Allantoin, Bioflavanoide und deren Derivate.

Bei Einsatz der Effektpigmente in Lacken und Farben sind alle dem Fachmann bekannten Anwendungsbereiche möglich, wie z. B. Pulverlacke, Automobillacke, Druckfarben für den Tief-, Offset-, Sieb- oder Flexodruck sowie für Lacke in Außenanwendungen. Die Lacke und Farben können hierbei beispielsweise strahlungshärtend, physikalisch trocknend oder chemisch härtend sein. Für die Herstellung der Druckfarben oder Flüssiglacke ist eine Vielzahl von Bindern, z.B. auf der Basis von Acrylaten, Methacrylaten, Polyestern, Polyurethanen, Nitrocellulose, Ethylcellulose, Polyamid, Polyvinylbutyrat, Phenolharzen, Maleinharzen, Stärke oder Polyvinylalkohol, Aminharzen, Alkydharzen, Epoxidharzen, Polytetrafluorethylen, Polyvinylidenfluoriden, Polyvinylchlorid oder Mischungen hieraus geeignet, insbesondere wasserlösliche Typen. Bei den Lacken kann es sich um Pulverlacke oder wasser- oder lösemittelbasierte Lacke handeln, wobei die Auswahl der Lackbestandteile dem Allgemeinwissen des Fachmanns unterliegt. Gängige polymere Bindemittel für Pulverlacke sind beispielsweise Polyester, Epoxide, Polyurethane, Acrylate oder Mischungen hieraus.

Darüber hinaus können die erfindungsgemäßen Effektpigmente in Folien und Kunststoffen verwendet werden, so z. B. in Agrarfolien, infrarotreflektierenden Folien und Scheiben, Geschenkfolien, Kunststoffbehältnissen und Formkörpern für alle dem Fachmann bekannten Anwendungen. Als Kunststoffe eignen sich alle gängigen Kunststoffe für die Einarbeitung der erfindungsgemäßen Effektpigmente, z. B. Duromere, Elastomere oder thermoplastische Kunststoffe. Die Beschreibung der Anwendungsmöglichkeiten und der einsetzbaren Kunststoffe, Verarbeitungsverfahren und Additive finden sich z. B. in der RD 472005 oder in R. Glausch, M. Kieser, R. Maisch, G. Pfaff, J. Weitzel, Perlglanzpigmente, Curt R. Vincentz Verlag, 1996, 83 ff., deren Offenbarungsgehalt hiermit umfasst ist.

Darüber hinaus eignen sich die erfindungsgemäßen Effektpigmente auch für den Einsatz im Sicherheitsdruck und in sicherheitsrelevanten Merkmalen für z. B. fälschungssichere Karten und Ausweise, wie z. B. Eintrittskarten, Personalausweise, Geldscheine, Schecks und Scheckkarten sowie für andere fälschungssichere Dokumente. Im Bereich der Landwirtschaft können die Effektpigmente zur Einfärbung von Saatgut und anderen Ausgangsgütern verwendet werden, darüber hinaus im Lebensmittelbereich zur Pigmentierung von Lebensmitteln. Zur Pigmentierung von Überzügen in Arzneimitteln wie z. B. Tabletten oder Dragees sind die erfindungsgemäßen Effektpigmente ebenfalls einsetzbar.

Da die erfindungsgemäßen zumeist silbergrauen Effektpigmente mit Metallglanz im Gegensatz zu Aluminiumpigment transparent sind für die elektromagnetische Strahlung (20 MHz - 100 GHz), sind diese Pigmente insbesondere auch für die Lackierung von Radar-Sensoren oder Abdeckungen von Radarsensoren geeignet.

Bevorzugte Lackierungen insbesondere für den Industrie- und Automobilbereich sowie Landmaschinen enthalten 1 - 40 Gew.%, insbesondere 10 - 25 Gew.%, der erfindungsgemäßen Effektpigmente.

Die erfindungsgemäßen Effektpigmente sind im Automobilbereich sowohl für die Metalllackierungen als auch für Kunststofflackierungen, wie z.B. Stoßstangen, Radar-Sensoren, Kühlergrill, Außenspiegel, geeignet, was insbesondere von Bedeutung ist, damit das Automobil bei der Lackierung ein einheitliches Erscheinungsbild hat. Weiterhin können mit den erfindungsgemäßen Pigmenten auch Lackformulierungen hergestellt werden mit denen Folien beschichtet werden, die ebenfalls im Automobilbereich eingesetzt werden können.

Die erfindungsgemäßen Effektpigmente können auch in jedem Verhältnis mit beispielsweise Aluminiumpigmenten zur Erzielung weiterer Farbeffekte gemischt werden. In Abhängigkeit vom Mischungsverhältnis ist das Pigmentgemisch noch transparent für die elektromagnetische Strahlung. Für radartransparente Automobillackierungen sollte das Pigmentgemisch bestehend aus den erfindungsgemäßen Effektpigmenten und Aluminiumpigmenten nicht mehr als 0,1 - 5 Gew.% und vorzugsweise nicht mehr als 1 - 3 Gew.% Aluminiumpigmente enthalten.

Für die Lasermarkierung unter Verwendung der erfindungsgemäßen Effektpigmente können alle bekannten thermoplastischen Kunststoffe, wie sie z.B. im Ullmann, Bd. 15, S. 457 ff., Verlag VCH beschrieben werden, verwendet werden. Geeignete Kunststoffe sind z.B. Polyethylen, Polypropylen, Polyamide, Polyester, Polyesterester, Polyetherester, Polyphenylenether, Polyacetal, Polybutylenterephthalat, Polymethylacrylat, Polyvinylacetat, Polystyrol, Acrylnitril-Butadien-Styrol-Copolymere, Acrylnitril-Styrol-Acrylester-Copolymere, Polycarbonat, Polyethersulfone, Polyetherketone, Polyurethane sowie deren Copolymere und/oder Mischungen. Weiterhin eignen sich die erfindungsgemäßen Effektpigmente auch für die Einarbeitung in Silikonkautschuk oder Silikonharze.

Die Einarbeitung der erfindungsgemäßen Effektpigmente in den thermoplastischen Kunststoff erfolgt, indem das Kunststoffgranulat mit dem Effektpigment gemischt und dann unter Wärmeeinwirkung verformt wird. Dem Kunststoffgranulat können bei der Einarbeitung der Effektpigmente dem Fachmann bekannte Haftmittel, organische polymerverträgliche Lösemittel, Stabilisatoren und/oder unter den Arbeitsbedingungen temperaturstabile Tenside zugesetzt werden. Die Herstellung der pigmentierten Kunststoffgranulate erfolgt in der Regel so, dass in einem geeigneten Mischer das Kunststoffgranulat vorgelegt, mit eventuellen Zusätzen benetzt und danach das Effektpigment zugesetzt und untergemischt wird. Die so erhaltene Mischung kann dann direkt in einem Extruder oder einer Spritzgussmaschine verarbeitet werden. Anschließend findet die Markierung mit geeigneter Strahlung statt.

Insbesondere handelt es sich bei dem Silikonkautschuk um einen bei niederer Temperatur (ab Raumtemperatur bis < 200°C, zweikomponentig) vernetzten Silikonkautschuk, welcher als RTV2-Silikon bezeichnet wird, um einen bei höheren Temperaturen vernetzten Silikonkautschuk (ab ca. 110 °C, zweikomponentig, bzw. ab ca. 160 °C, einkomponentig), welcher als HTV-Silikon bezeichnet wird, oder um einen flüssig vernetzten Silikonkautschuk (ab ca. 110 °C, zweikomponentig), welcher als LSR-Silikon bezeichnet wird. Diesen ein- oder zweikomponentigen Silikonkautschuk Komponenten wird das erfindungsgemäße Effektpigment hinzugefügt und homogen darin verteilt. Die Mischung wird dann bestimmungsgemäß in den Hohlraum einer Spritzgussform eingetragen und unter geeigneten Bedingungen vernetzt. Die dazu nötigen Bedingungen wie Temperatur, Druck und Reaktionszeit sind dem Fachmann bekannt und werden entsprechend der Ausgangsstoffe und der gewünschten finalen Elastomere ausgewählt. Bei einkomponentigen Systemen entfällt die separate Zugabe eines Vernetzungsmittels. Der Vernetzungsprozess kann durch die Zufuhr aktinischer Strahlung, beispielsweise durch UV- oder Gammastrahlung, beschleunigt werden. Die so erhaltene Mischung wird der Spritzgussmaschine entnommen. Anschließend findet die Markierung mit geeigneter Strahlung statt.

Vorzugsweise wird bei der Markierung energiereiche Strahlung eingesetzt, im Allgemeinen im Wellenlängenbereich von 157 bis 10600 nm, insbesondere im Bereich von 300 bis 10600 nm. Beispielsweise seien hier $CO_2$-Laser (10600 nm), Nd:YAG-Laser (1064 bzw. 532 nm) oder gepulste UV-Laser (Excimer-Laser) erwähnt. Die Excimerlaser weisen folgende Wellenlängen auf: $F_2$-Excimerlaser (157 nm), ArF-Excimerlaser (193 nm), KrCl-Excimerlaser (222 nm), KrF-Excimerlaser (248 nm), XeCl-Excimerlaser (308 nm), XeF-Excimerlaser (351 nm), frequenzvervielfachte Nd : YAG-Laser mit Wellenlängen von 355 nm (frequenzverdreifacht) oder 265 nm (frequenzvervierfacht). Besonders bevorzugt werden Nd : YAG-Laser (1064 bzw. 532 nm) und $CO_2$-Laser eingesetzt. Die Energiedichten der eingesetzten Laser liegen im Allgemeinen im Bereich von 0,3 mJ/cm$^2$ bis 50 J/cm$^2$, vorzugsweise 0,3 mJ/cm$^2$ bis 10 J/cm$^2$.

Die Beschriftung mit dem Laser erfolgt derart, dass der Probenkörper in den Strahlengang eines gepulsten Lasers, vorzugsweise eines $CO_2$- oder Nd : YAG-Lasers gebracht wird. Ferner ist eine Beschriftung mit einem Excimer-Laser, z. B. über eine Maskentechnik, möglich. Jedoch sind auch mit anderen herkömmlichen Lasertypen, die eine Wellenlänge in einem Bereich hoher Absorption der verwendeten laserlichtabsorbierenden Substanz aufweisen, die gewünschten Ergebnisse zu erzielen. Die erhaltene Markierung wird durch die Bestrahlungszeit (bzw. Pulszahl bei Pulslasern) und Bestrahlungsleistung des Lasers sowie des verwendeten Kunststoffsystems bzw. Lacksystems bestimmt. Die Leistung der verwendeten Laser hängt von der jeweiligen Anwendung ab und kann im Einzelfall vom Fachmann ohne weiteres ermittelt werden.

Bei der Verwendung von gepulsten Lasern liegt die Pulsfrequenz im Allgemeinen im Bereich von 1 bis 30 kHz. Entsprechende Laser, die im erfindungsgemäßen Verfahren eingesetzt werden können, sind kommerziell erhältlich.

Die Verwendung der erfindungsgemäßen Effektpigmente zur Lasermarkierung kann in allen oben genannten Kunststoffen erfolgen. Die auf diese Weise pigmentierten Kunststoffe können als Formkörper in der Elektro-, Elektronik- und Kraftfahrzeugindustrie Anwendung finden. Ein weiteres wichtiges Anwendungsgebiet für die Laserbeschriftung sind Ausweiskarten und Kunststoffmarken zur individuellen Kennzeichnung von Tieren. Der Anteil an Effektpigmenten im Kunststoff beträgt im Falle der Lasermarkierung bei den Anwendungen 0.01 bis 10 Gew.-%, vorzugsweise 0.05 bis 5 Gew.-% und insbesondere 0.1 bis 3 Gew.-%. Die Kennzeichnung und Beschriftung von Gehäusen, Leitungen, Tastenkappen, Zierleisten bzw. Funktionsteilen im Heizungs-, Lüftungs- und Kühlbereich oder Schalter, Stecker, Hebel und Griffe, die aus den mit den erfindungsgemäßen Pigmenten pigmentierten Kunststoffen bestehen, kann selbst an schwer zugänglichen Stellen mit Hilfe von Laserlicht erfolgen. Die Markierungen zeichnen sich dadurch aus, dass sie wisch- und kratzfest, stabil bei nachträglichen Sterilisationsprozessen und hygienisch rein beim Markierungsprozess aufbringbar sind.

Es versteht sich von selbst, dass für die verschiedenen Anwendungszwecke das erfindungsgemäße Effektpigment auch vorteilhaft in Abmischung mit z. B.

- Metalleffektpigmenten, z. B. auf der Basis von Eisen- oder Aluminiumplättchen;
- Perlglanzpigmenten auf der Basis von metalloxidbeschichteten synthetischen Glimmer-Plättchen, natürlichen Glimmerplättchen, Glas-Plättchen, $Al_2O_3$-Plättchen, $Fe_2O_3$-Plättchen oder $SiO_2$-Plättchen;
- Absorptionspigmenten;
- goniochromatischen Pigmenten;
- Mehrschichtpigmenten (enthaltend vorzugsweise 2, 3, 4, 5 oder 7 Schichten) auf der Basis von metalloxidbeschichteten synthetischen Glimmer-Plättchen, natürlichen Glimmerplättchen, Glas-Plättchen, $Al_2O_3$-Plättchen, $Fe_2O_3$-Plättchen oder $SiO_2$-Plättchen;
- organischen Farbstoffen;
- organischen Pigmenten;
- anorganischen Pigmenten, wie z.B. transparenten und deckenden Weiß- , Bunt- und Schwarzpigmenten; insbesondere temperaturstabile keramische Pigmente;
- plättchenförmigen Eisenoxiden;

- Ruß;
- keramischen Farbkörpern;
- funktionellen Pigmenten, z.B. IR-reflektierende oder elektrisch leitfähige Pigmente

eingesetzt werden kann.

Das erfindungsgemäße Effektpigment kann in jedem Verhältnis mit handelsüblichen Pigmenten und/oder weiteren handelsüblichen Füllstoffen gemischt werden.

Als Füllstoffe sind z. B. natürlicher und synthetischer Glimmer, Nylon Powder, reine oder gefüllte Melaminharze, Talkum, Gläser, Kaolin, Oxide oder Hydroxide von Aluminium, Magnesium, Calcium, Zink, BiOCl, Bariumsulfat, Calciumsulfat, Calciumcarbonat, Magnesiumcarbonat, Kohlenstoff, sowie physikalische oder chemische Kombinationen dieser Stoffe zu nennen. Bezüglich der Partikelform des Füllstoffes gibt es keine Einschränkungen. Sie kann den Anforderungen gemäß z. B. plättchenförmig, sphärisch oder nadelförmig sein.

Formulierungen enthaltend das erfindungsgemäße Effektpigment können weiterhin mindestens einen Bestandteil ausgewählt aus der Gruppe Absorptionsmittel, Adstringenzien, antimikrobielle Stoffe, Antioxidantien, Antischaummittel, Antistatika, Bindemittel, biologische Zusatzstoffe, Bleichmittel, Chelatbildner, Desodorierungsmittel, Emollentien, Emulgatoren, Emulsionsstabilisatoren, Farbstoffe, Feuchthaltemittel, Filmbildner, Füllstoffe, Geruchsstoffe, Geschmacksstoffe, Insect Repellents, Konservierungsmittel, Korrosionsschutzmittel, kosmetische Öle, Lösungsmittel, Oxidationsmittel, pflanzliche Bestandteile, Puffersubstanzen, Reduktionsmittel, Tenside, Treibgase, Trübungsmittel, UV-Filter, UV-Absorber, Vergällungsmittel, Viskositätsregler, Parfüme, Vitamine, Enzyme, Spurenelemente, Proteine, Kohlenhydrate, organische Pigmente, anorganische Pigmente, wie z.B. $TiO_2$, Ruß, weitere Effektpigmente Metallpigmente, wie z.B. Aluminiumpigmente, Effektpigmente, Metalleffektpigmente, enthalten.

Die erfindungsgemäßen Effektpigmente sind weiterhin geeignet zur Herstellung von fließfähigen Pigmentpräparationen und Trockenpräparaten enthaltend ein oder mehrere erfindungsgemäße Partikel, Bindemittel und optional ein oder mehrere Additive. Unter Trockenpräparate sind auch Präparate zu verstehen, die 0 bis 8 Gew.-%, vorzugsweise 2 bis 8 Gew.-%, insbesondere 3 bis 6 Gew.-%, an Wasser und/oder eines Lösemittels oder Lösemittelgemisches enthalten. Die Trockenpräparate liegen vorzugsweise als Pellets, Granulate, Chips, Würstchen oder Briketts vor und weisen Teilchengrößen von 0,2 - 80 mm auf. Die Trockenpräparate finden insbesondere Anwendung bei der Herstellung von Druckfarben und in kosmetischen Formulierungen.

Die vollständige Offenbarung aller vorstehend genannten Patentanmeldungen, Patente und Veröffentlichungen ist durch Bezugnahme in dieser Anmeldung enthalten.

Die nachfolgenden Beispiele sollen die Erfindung näher erläutern, ohne sie jedoch zu begrenzen.

**Beispiele**

Beispiel 1: Vergleichsbeispiel (ohne F-Dotierung):

Beispiel 1a

30 g Iriodin® 119 (mit $TiO_2$ beschichtete Glimmerplättchen mit einer Partikel-Größenverteilung von 5-25 $\mu$m, Fa. Merck KGaA) und 0,34 g Si-Pulver (< 100 $\mu$m, Fa. Merck KGaA), 0,23 g feines $CaCl_2$-Pulver (< 20 $\mu$m, Fa. Merck KGaA) und 0,45 g Talkum (< 15 $\mu$m, Fa. Mondo) werden sorgfältig in einer PP Dose im DAC 150 FVZ Speedmixer der Fa. Hauschild vermischt. Die Mischung wird gleichmäßig in einem Quarzglas-Schiffchen verteilt. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 850 °C geregelt ist und dort für 45 min belassen. Danach wird das Rohr aus dem Ofen entfernt und für 30 min im Stickstoffstrom abgekühlt. Das geglühte Pulver wird über ein 40 $\mu$m Sieb aufbereitet.

Man erhält ein silberweißes Effektpigment, das keinen Metallglanz zeigt.

Röntgendiffraktogramme vor und nach dem Glühen zeigen, dass die kristallographische Struktur der $TiO_2$-Schicht auf dem Glimmerplättchen sich durch die reduzierende Glühung nicht ändert. Die Kristallstruktur der $TiO_2$-Schicht ist unverändert, d. h., es liegt kein Titansuboxid vor.

Beispiel 1b

Analog Beispiel 1a, aber die Temperatur wird von 850 °C auf 900 °C erhöht.

Beispiel 1c

Analog Beispiel 1a, aber die Temperatur wird von 850 °C auf 950 °C erhöht.

Tabelle 1: Vergleichsbeispiele bei verschiedenen Reaktionstemperaturen:

| Beispiel | Iriodin® 119 | Si | CaCl$_2$ | Talkum | Temp. | Zeit | N$_2$ |
|----------|--------------|--------|----------|--------|--------|--------|---------|
| 1a | 30 g | 0,34 g | 0,23 g | 0,45 g | 850 °C | 45 min | 55 l/h |
| 1b | 30 g | 0,34 g | 0,23 g | 0,45 g | 900 °C | 45 min | 55 l/h |
| 1c | 30 g | 0,34 g | 0,23 g | 0,45 g | 950 °C | 45 min | 55 l/h |

Die Effektpigmente der Beispiele 1a, 1b und 1c zeigen alle kein bzw. nur ein geringes Deckvermögen und erst ab 950 °C wird ein Metallglanz erkennbar. Mit der hohen Temperatur ist aber gleichzeitig die Bildung von unerwünschten Aggregaten zu beobachten.

Beispiel 2: Dotierung mit Fluorid aus verschiedenen Präkursoren

Beispiel 2a: Dotierung mit CaF$_2$

30 Iriodin® 119 (mit TiO$_2$ beschichtete Glimmerplättchen mit einer Partikel-Größenverteilung von 5-25 µm, Fa. Merck KGaA), 0,34 g Si-Pulver (< 100 µm; Fa. Merck KGaA), 0,23 g CaCl$_2$-Pulver (< 20 µm; Fa. Merck KGaA) und 0,45 g Talkum (< 15 µm, Fa. Mondo) sowie 0,1 g CaF$_2$-Pulver (< 20 µm, Fa. Merck KGaA) werden sorgfältig in einer PP Dose im DAC 150 FVZ Speedmixer der Firma Hauschild vermischt. Statt CaF$_2$ können auch Experimente mit MgF$_2$-Pulver (Fa. Merck KGaA), NaF-Pulver (Fa. Aldrich) und PTFE-Pulver (35 µm, Aldrich) durchgeführt.
Wenn ein fluoridhaltiger Glimmer (Fluorophlogopit, Fa. Merck KGaA) verwendet wird, kann auf die Zugabe von Talk verzichtet werden. Die entsprechenden Mengen sind in Tabelle 2 gelistet. Die Mischung wird gleichmäßig in einem Quarzglas Schiffchen verteilt. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 850 °C bzw. 875 °C geregelt war und dort für 45 min belassen. Danach wird das Rohr aus dem Ofen entfernt und für 30 min im Stickstoffstrom abgekühlt. Das geglühte Pulver wird über ein 40 µm Sieb aufbereitet.

Beispiel 2b: Dotierung mit MgF$_2$

Analog Beispiel 2a, aber statt 0,1 g CaF$_2$ wird 0,1 g MgF$_2$ (Fa. Merck KGaA) eingesetzt.

Beispiel 2c: Dotierung mit NaF

Analog Beispiel 2a, aber statt 0,1 g CaF$_2$ wird 0,1 g NaF (Fa. Aldrich) eingesetzt.

Beispiel 2d: Dotierung mit PTFE-Pulver

Analog Beispiel 2a, aber statt 0,1 g CaF$_2$ wird 0,1 g Polytetrafluorethylen-Pulver (35 µm, Fa. Aldrich) eingesetzt durchgeführt.

Beispiel 2e: Dotierung mit Fluorophlogopit

30 g Iriodin® 119 (mit TiO$_2$ beschichtete Glimmerplättchen mit einer Partikel-Größenverteilung von 5-25 µm, Fa. Merck KGaA KGaA) 0,34 g Si-Pulver (< 100 µm; Merck KGaA), 0,23 g feines CaCl$_2$-Pulver (< 20 µm; Merck KGaA) sowie 0,45 g Fluorophlogopit (Partikelgröße < 15 µm, Fa.
Merck KGaA) werden sorgfältig in einer PP Dose im DAC 150 FVZ Speedmixer der Firma Hauschild vermischt. Die entsprechenden Mengen sind in Tabelle 2 gelistet. Die Mischung wird gleichmäßig in einem Quarzglas Schiffchen verteilt. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 850 °C bzw. 875 °C geregelt war und dort für 45 min belassen. Danach wird das Rohr aus dem Ofen entfernt und für 30 min im Stickstoffstrom abgekühlt. Das geglühte Pulver wird über ein 40 μm Sieb aufbereitet.

Die Pigmente gemäß der Beispiele 2a-e zeigen einen silbergrauen Metallglanz und mit Ausnahme von Beispiel 2c ein deutlich höheres Deckvermögen als die Vergleichsbeispiele 1a-c, die bei gleicher Temperatur hergestellt werden. Schon bei 850 °C wird bei den Pigmenten ein Deckvermögen erreicht, das die Vergleichsbeispiele auch bei 950 °C noch nicht erreicht haben, aber schon deutliche Aggregatbildung zu beobachten ist. Das Pigment aus Beispiel 2d ist deutlich dunkler in der Erscheinung als die Pigmente gemäß der Beispiele 2a-c und 22. Man kann somit auch die Helligkeit der Pigmente über einen Bereich steuern der mit dem in den Vergleichsbeispielen 1a-c gewählten Ansatz nicht erreichbar ist, ohne die Qualität zu mindern (Aggregatbildung).

Tabelle 2: Beispiele mit verschiedenen F-Präkursoren (Mengen, Bedingungen):

| Beispiel | Iriodin® 119 | Si | CaCl$_2$ | Talku m | F-Quelle / Menge | Temp. | Zeit | N$_2$ |
|----------|--------------|------|----------|---------|------------------|--------|--------|--------|
| 2a | 30 g | 0,34 g | 0,23 g | 0,45g | CaF$_2$ / 0,1 g | 850 °C | 45 min | 55 l/h |
| 2b | 30 g | 0,34 g | 0,23 g | 0,45g | MgF$_2$ / 0,1 g | 850 °C | 45 min | 55 l/h |
| 2c | 30 g | 0,34 g | 0,23 g | 0,45g | NaF / 0,1 g | 875 °C | 45 min | 55 l/h |
| 2d | 30 g | 0,34 g | 0,23 g | 0,45g | PTFE / 0,1 g | 875 °C | 45 min | 55 l/h |
| 2e | 30 g | 0,26 g | 0,23 g | --- | Fluorophlogopit/ 0,45 g | 850 °C | 45 min | 55 l/h |

Beispiel 3: Temperaturvarianten mit Fluorophlogopit 30 g Iriodin® 119 (mit TiO$_2$ beschichtete Glimmerplättchen mit einer Partikel-Größenverteilung von 5-25 μm; Fa. Merck KGaA) und 0,79 g Si-Pulver (< 100 μm; Fa. Merck KGaA), 0,69 g CaCl$_2$-Pulver (< 20μm; Fa. Merck KGaA) und 1,35 g gemahlenen Fluorophlogopit (<15 μm, Fa. Merck KGaA) werden sorgfältig in einer PP Dose im DAC 150 FVZ Speedmixer der Firma Hauschild vermischt. Die Mischung wird gleichmäßig in einem Quarzglas Schiffchen verteilt. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 850°C geregelt war und dort für 45 min belassen. Danach wird das Rohr aus dem Ofen entfernt und für 30 min im Stickstoffstrom abgekühlt. Das geglühte Pulver wird über ein 40 μm Sieb aufbereitet.

Beispiel 3b

Beispiel 3a wird wiederholt, aber bei Temperaturen von 875 °C durchgeführt.

Beispiel 3c

Beispiel 3a wird wiederholt, aber bei Temperaturen von 900 °C durchgeführt.

Beispiel 3d

Beispiel 3a wird wiederholt, aber bei Temperaturen von 925 °C durchgeführt.

Tabelle 3: Beispiel mit höherem Reaktanten-Anteil bei verschiedenen Reaktionstemperaturen

| Beispiel | Iriodin® 119 | Si | CaCl$_2$ | Fluorophlogopit | Temp. | Zeit | N$_2$ |
|----------|--------------|------|----------|-----------------|--------|--------|--------|
| 3a | 30g | 0,79g | 0,69g | 1,35g | 850 °C | 45min | 55 l/h |
| 3b | 30g | 0,79g | 0,69g | 1,35g | 875 °C | 45min | 55 l/h |
| 3c | 30g | 0,79g | 0,69g | 1,35g | 900 °C | 45min | 55 l/h |
| 3d | 30g | 0,79g | 0,69g | 1,35g | 925 °C | 45min | 55 l/h |

Beispiel 3 zeigt den Einfluss der Temperatur auf die optischen Eigenschaften, insbesondere den Metallglanz. Bei Temperaturen von ≥ 900 °C geht der Metallglanz verloren und man erhält ein mattes silbergraues Effektpigment.

Beispiel 4

Analog den Beispielen 2e und 3a werden Varianten mit verschiedenen Anteilen an Silizium, Calciumchlorid und Fluorophlogopit bei sonst gleichen Reaktionsbedingungen und gleicher Aufarbeitung durchgeführt wie in Tabelle 4 zusammengefasst.

Tabelle 4: Beispiele mit verschiedenen Mengen der Reaktanten

| Beispiel | Iriodin® 119 | Si | CaCl₂ | Fluorophlogopit | Temp. | Zeit | N₂ |
|---|---|---|---|---|---|---|---|
| 4a | 30 g | 0,17 g | 0,12 g | 0,45 g | 850 °C | 45min | 55 l/h |
| 4b | 30 g | 0,26 g | 0,23 g | 0,45 g | 850 °C | 45min | 55 l/h |
| 4c | 30 g | 0,26 g | 0,23 g | 0,90 g | 850 °C | 45min | 55 l/h |
| 4d | 30 g | 0,26 g | 0,23 g | 1,35 g | 850 °C | 45min | 55 l/h |
| 4e | 30 g | 0,34 g | 0,23 g | 0,45 g | 850 °C | 45min | 55 l/h |
| 4f | 30 g | 0,78 g | 0,69 g | 1,35 g | 850 °C | 45min | 55 l/h |

Aus den Beispielen 4a bis 4f erhält man jeweils silbergraue Effektpigmente mit Metallglanz und hohem Deckvermögen. Die Pigmente sind in der Helligkeit sehr ähnlich unterscheiden sich aber im Blaustich. Die gemäß Vergleichsbeispiel 1a-c hergestellten Pigmente zeigen dagegen eher eine gelblichen bis eierschalenfarbenen Ton. Für metallische Effektpigmente wird ein kühler Blauton erwartet.

Beispiel 5: Effektpigmente mit variabler TiO₂-Schichtdicke:

Beispiel 5a

30 g Iriodin® 211 Fine Red (mit TiO₂ beschichtete Glimmerplättchen mit einer Partikel Größenverteilung von 5-25 μm, das eine weiße Körperfarbe mit roten Reflektionen aufweist, Fa. Merck KGaA) und 0,26 g Si-Pulver (<100 μm; Fa. Merck KGaA), 0,46 g CaCl₂-Pulver (< 20 μm; Fa. Merck KGaA KGaA) und 0,45 g gemahlenen Fluorophlogopit (< 15 μm, Fa. Merck KGaA) wird sorgfältig in einer PP Dose im DAC 150 FVZ Speedmixer der Firma Hauschild vermischt. Die Mischung wird gleichmäßig in einem Quarzglas Schiffchen verteilt. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 925 °C geregelt war und dort für 15 min belassen. Danach wird das Rohr aus dem Ofen entfernt und für 30 min im Stickstoffstrom abgekühlt. Das geglühte Pulver wird über ein 40 μm Sieb aufbereitet.
Aus dem schwach grünen Interferenzpigment erhält man ein intensives blaugrünes Effektpigment mit grauer Absorption und hohem Deckvermögen.

Beispiel 5b

30 g Iriodin® 231 Fine Green (mit TiO₂ beschichtete Glimmerplättchen mit einer Partikel Größenverteilung von 5-25 μm, das eine weiße Körperfarbe mit grünen Reflektionen aufweist, Fa. Merck KGaA) und 0,26 g Si-Pulver (<100 μm; Fa. Merck KGaA), 0,46 g CaCl₂-Pulver (< 20 μm; Fa. Merck KGaA) und 0,45 g gemahlenen Fluorophlogopit (< 15 μm, Fa. Merck KGaA) wird sorgfältig in einer PP Dose im DAC 150 FVZ Speedmixer der Firma Hauschild vermischt. Die Mischung wird gleichmäßig in einem Quarzglas Schiffchen verteilt. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 925 °C geregelt war und dort für 15 min belassen. Danach wird das Rohr aus dem Ofen entfernt und für 30 min im Stickstoffstrom abgekühlt. Das geglühte Pulver wird über ein 40 μm Sieb aufbereitet.
Man erhält ein kupferfarbenes Effektpigment mit grauer Absorption und hohem Deckvermögen.

Tabelle 5: Beispiele von $TiO_2$-Mica-Effektpigmenten mit verschiedenen Schichtdicken:

| Beispiel | Pigment | Si | $CaCl_2$ | Fluorphlogopit | Temperatur | Zeit | $N_2$ |
|----------|---------|-----|---------|----------------|------------|-------|-------|
| 5a | 30g Iriodin® 211 | 0,26g | 0,46g | 0,45g | 925 °C | 15min | 55 l/h |
| 5b | 30g Iriodin® 231 | 0,26g | 0,46g | 0,45g | 925 °C | 15min | 55 l/h |

Beispiel 6

Beispiel 6a

30 g Colorstream® T10-02 Arctic Fire (mit $TiO_2$-beschichtete $SiO_2$-Plättchen mit einer Partikel-Größenverteilung von 5-60 μm, Fa. Merck KGaA) und 0,26 g Si-Pulver (<100μm; Merck KGaA), 0,46 g $CaCl_2$-Pulver (< 20 μm; Fa. Merck KGaA) und 0,45 g gemahlenen Fluorophlogopit (< 15 μm, Fa. Merck KGaA) wird intensiv vermischt. Die Mischung wird gleichmäßig in einem Quarzglas-Schiffchen verteilt. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 925 °C geregelt war und dort für 30 min belassen. Danach wird das Rohr aus dem Ofen entfernt und für 30 min im Stickstoffstrom abgekühlt. Das geglühte Pulver wird über ein 63 μm Sieb aufbereitet.
Das so erhaltene Effektpigment zeigt einen starken Farbflop von fliederfarben zu blassgrün und einen Metallglanz.

Beispiel 6b

Zusätzlich wird eine dunklere Variante mit einer größeren Menge an Reaktanten hergestellt wie in der nachfolgenden Tabelle angegeben.
Mit höherem Anteil an Reaktanden wird das Effektpigment deutlich dunkler in seiner Erscheinung. Der Farbflop ist dann weniger ausgeprägt.

Tabelle 6: Beispiele mit $SiO_2$-Plättchen als Substrat

| Beispiel | Pigment | Si | $CaCl_2$ | Fluorophlogopit | Temperatur | Zeit | $N_2$ |
|----------|---------|-----|---------|-----------------|------------|-------|-------|
| 6a | 30 g Colorstream® T10-02 | 0,26 g | 0,46 g | 0,45 g | 925 °C | 15min | 55 l/h |
| 6b | 30 g Colorstream® T10-02 | 0,79 g | 0,69 g | 1,35 g | 925 °C | 15min | 55 l/h |

Beispiel 7: Beispiele mit Glasplättchen als Substrat

Beispiel 7a

30 g Miraval® 5311 Scenic White (mit $TiO_2$-beschichtete Glas-Plättchen mit weißer Körperfarbe und mit einer Partikel Größenverteilung von 10-100 μm, Fa. Merck KGaA) und 0,79 g Si-Pulver (Partikelgröße < 100μm; Fa. Merck KGaA), 0,69 g $CaCl_2$-Pulver (< 20μm; Fa. Merck KGaA) und 1,35 g gemahlener Fluorophlogopit (< 15 μm, Fa. Merck KGaA) werden sorgfältig in einer PP Dose im DAC 150 FVZ Speedmixer der Firma Hauschild vermischt. Die Mischung wird gleichmäßig in einem Quarzglas Schiffchen verteilt. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 700 °C geregelt ist und dort für 45 min belassen. Danach wird das Rohr aus dem Ofen entfernt und für 30 min im Stickstoffstrom abgekühlt. Das geglühte Pulver wird über ein 100 μm Sieb aufbereitet.

Beispiel 7b

30 g Miraval® 5402 Pacific Twinkle (mit $TiO_2$-beschichtete Glasplättchen mit weißer Körperfarbe und mit einer Partikelgrößenverteilung von 10-100 μm, Fa. Merck KGaA)) und 0,79 g Si-Pulver (< 100 μm; Fa. Merck KGaA), 0,69 g

CaCl$_2$-Pulver (< 20 μm; Fa. Merck KGaA) und 1,35 g gemahlenen Fluorophlogopit (< 15 μm, Fa. Merck KGaA) werden sorgfältig in einer PP Dose im DAC 150 FVZ Speedmixer der Firma Hauschild vermischt. Die Mischung wird gleichmäßig in einem Quarzglas Schiffchen verteilt. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 700 °C geregelt war und dort für 45 min belassen. Danach wird das Rohr aus dem Ofen entfernt und für 30 min im Stickstoffstrom abgekühlt. Das geglühte Pulver wird über ein 100 μm Sieb aufbereitet.

Die Effektpigmente gemäß der Beispiele 7a und 7b werden im Vergleich zu den Basispigmenten dunkler in ihrer Erscheinung; das Silberpigment aus Beispiel 7a bekommt einen erkennbaren metallischen Charakter und das türkise Interferenzpigment aus Beispiel 7b wird zu einem intensiven blauen Effektpigment, obwohl in beiden Beispielen nur bei 700 °C geglüht wird um die temperaturempfindlichen Glasplättchen nicht zu zerstören.

Tabelle 7:

| Beispiel | Pigment | Si | CaCl$_2$ | Fluorophlogopit | Temperatur | Zeit | N$_2$ |
|---|---|---|---|---|---|---|---|
| 7a | 30 g Miraval® 5311 | 0,79 g | 0,69 g | 1,35 g | 700 °C | 15min | 55 l/h |
| 7b | 30 g Miraval® 5402 | 0,79 g | 0,69 g | 1,35 g | 700 °C | 15min | 55 l/h |

Beispiel 8: Beispiele mit synthetischem Glimmer als Substrat

Beispiel 8a

30 g Iriodin® 6123 (mit TiO$_2$ beschichte synthetische Glimmerplättchen (=Fluorophlogopit) mit einer Partikel-Größenverteilung von 5-25 μm, Fa. Merck KGaA) und 0,34 g Si-Pulver (< 100 μm, Fa. Merck KGaA), 0,23 g CaCl$_2$-Pulver (< 20 μm, Fa. Merck KGaA) und 0,45 g Talk (< 15 μm, Fa. Mondo) werden sorgfältig in einer PP Dose im DAC 150 FVZ Speedmixer der Firma Hauschild vermischt. Auf eine zusätzliche Gabe eines Fluorid-Präkursors wird wegen des fluorhaltigen Substrats (synthetischer Glimmer) verzichtet. Die Mischung wird gleichmäßig in einem Quarzglas Schiffchen verteilt. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 850°C geregelt war und dort für 45 min belassen. Danach wird das Rohr aus dem Ofen entfernt und für 30 min im Stickstoffstrom abgekühlt. Das geglühte Pulver wird über ein 40 μm Sieb aufbereitet.

Beispiel 8b

Beispiel 8a wird mit reduziertem Reaktanten-Einsatz wiederholt wie aus Tabelle 8 zu entnehmen ist.

Da das Substrat aus synthetischem Glimmer (=Fluorophlogopit) selbst eine ausreichende Menge Fluoridionen enthält, ist eine zusätzliche Gabe von Fluorid-Präkursor nicht notwendig. Das Pigment aus Beispiel 8a ist sogar deutlich dunkler als beispielsweise eine physikalische Mischung mit purem Fluorophlogopit, da sich die Fluorid-Quelle im Inneren des zu reduzierenden Pigments befindet. Daher wird in Beispiel 8b mit deutlich verringertem Einsatz an Reaktanden ein Pigment erzeugt, das in Helligkeit und Deckvermögen den Pigmenten gemäß Beispiel 4 nahe kommt.

Tabelle 8:

| Beispiel | Pigment | Si | CaCl$_2$ | Talk | Temperatur | Zeit | N$_2$ |
|---|---|---|---|---|---|---|---|
| 8a | 30 g Iriodin® 6123 | 0,34 g | 0,23 g | 0,45 g | 850 °C | 45 min | 55 l/h |
| 8b | 30 g Iriodin® 6123 | 0,17 g | 0,12 g | 0,23 g | 850 °C | 45 min | 55 l/h |

Beispiel 9: Beispiele mit Al$_2$O$_3$-Plättchen als Substrat

Beispiel 9a

30 g Xirallic® Crystal Silver T50-10 (mit $TiO_2$ beschichtete Aluminiumoxid-Plättchen mit weißer Körperfarbe und silberweißen Reflektionen und einer Partikel-Größenverteilung von 15-22 $\mu$m, Fa. Merck KGaA), 0,34 g Si-Pulver (< 100 $\mu$m; Fa. Merck KGaA), 0,23 g $CaCl_2$-Pulver (< 20 $\mu$m; Fa. Merck KGaA) und 0,45 g Talk (< 15 $\mu$m, Fa. Mondo) sowie 0,1 g $CaF_2$-Pulver (< 20 $\mu$m, Fa. Merck KGaA) werden sorgfältig in einer PP Dose im DAC 150 FVZ Speedmixer der Firma Hauschild vermischt. Statt $CaF_2$ werden Experimente mit $MgF_2$ (< 20 $\mu$m, Fa. Merck KGaA) und Fluorophlogopit (< 15 $\mu$m, synthetischer Glimmer, Fa. Merck KGaA) durchgeführt. Wenn Fluorophlogopit verwendet wird, wird auf die Zugabe von Talk verzichtet, da es als Schichtsilikat, wie Talk, die Rieselfähigkeit der Mischung verbessert. Die entsprechenden Mengen sind in der nachfolgenden Tabelle (9 a-c) gelistet. Die Mischung wird gleichmäßig in einem Quarzglas-Schiffchen verteilt. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 850 °C geregelt war und dort für 45 min belassen. Danach wird das Rohr aus dem Ofen entfernt und für 30 min im Stickstoffstrom abgekühlt. Das geglühte Pulver wird über ein 40 $\mu$m Sieb aufbereitet.

Die Effektpigmente aus den Beispielen 9a-c weisen einen dunklen, metallischen Grauton auf und zeigen den typischen Sparkle-Effekt, wenn Aluminiumoxid als Substrat verwendet wird. In den Beispielen 9a und 9b ist ein blauer Farbton deutlich zu erkennen.

In einer Variante wird 10 g Xirallic® Crystal Silver T50-10 (mit $TiO_2$ beschichtete Aluminiumoxid-Plättchen mit einer Partikel Größenverteilung von 15-22 $\mu$m, die eine weiße Körperfarbe mit silberweißen Reflektionen aufweisen, Fa. Merck KGaA), 0,11 g Si-Pulver (<100 $\mu$m; Fa. Merck KGaA), 0,08 g $CaCl_2$-Pulver (< 20 $\mu$m; Fa. Merck KGaA) werden sorgfältig in einer PP Dose im DAC 150 FVZ Speedmixer der Firma Hauschild vermischt und mittig im Quarzschiffchen in gleichmäßiger Schüttung verteilt. Je 0,2 g $CaF_2$-Pulver (< 20 $\mu$m, Fa. Merck KGaA) wird links und rechts neben der Mischung im Abstand von ca. 2 cm im Quarzglas-schiffchen aufgehäuft. Die entsprechenden Mengen sind in der nachfolgenden Tabelle (Beispiel 9e) gelistet. Im Kontrollexperiment (Beispiel 9d) wird kein $CaF_2$ neben der Mischung platziert. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 850 °C geregelt war und dort für 30 min belassen. Danach wird das Rohr aus dem Ofen entfernt und für 30 min im Stickstoffstrom abgekühlt.

Vom unbehandelten Pigment der Beispiele 9d und 9e, dem Kontrollexperiment (ohne $CaF_2$) und dem Experiment mit $CaF_2$ in Nachbarschaft zur Reaktionsmischung werden Proben aus der Mischung entnommen, mit destilliertem Wasser gewaschen und bei 110 °C getrocknet. Die so vorbereiteten Proben werden einer Röntgen-Photoelektronen-Spektroskopie (XPS) unterzogen um die Zustände von $Ti^{3+}$ und $F^-$ im $TiO_2$-Kristallgitter zu bestimmen.

Tabelle 9: Beispiele von $TiO_2$-Aluminiumoxid Pigmenten mit verschiedenen F-Präkursoren (Mengen, Bedingungen)

| Beispiel | Xirallic® Crystal Silver T50-10 | Si | $CaCl_2$ | Talk | F-Quelle / Menge | Temperatur | Zeit | $N_2$ |
|---|---|---|---|---|---|---|---|---|
| 9a | 30g | 0,34g | 0,23g | 0,45g | $CaF_2$ / 0,1q | 850 °C | 45 min | 55 l/h |
| 9b | 30g | 0,34g | 0,23g | 0,45g | $MgF_2$/ 0,1g | 850 °C | 45 min | 55 l/h |
| 9c | 30g | 0,34g | 0,23g | 0,45g | Fluorophlogopit / 0,45g | 850 °C | 45 min | 55 l/h |
| 9d | 10g | 0,11g | 0,08g | - | - | 850 °C | 30 min | 55 l/h |
| 9e | 10g | 0,11g | 0,08g | - | $CaF_2$ (extra) / 2 x 0,2g | 850 °C | 30 min | 55 l/h |

Die quantitative Fluoridbestimmung über eine Verbrennungs-Ionenchromatographie liefert Werte von 540 bis 935 $\mu$g Fluorid pro 1 g Probe (entspricht 0,003 bis 0,005 at% Fluorid).

Beispiel 10: Nb dotiertes Titanoxid auf Glimmerplättchen

30 g mit $TiO_2$ beschichtete Glimmerplättchen mit einer Partikel-Größenverteilung von 10-60 $\mu$m, das bei 700 °C an Luft eine weiße Körperfarbe mit bläulicher Reflektion aufweist, bei dem das Titanoxid zu 8 mol% schon während der Synthese durch Kopräzipitation einer entsprechend gemischten Lösung aus $TiCl_4$ und $NbCl_5$ in HCl und VE-Wasser mit Niob dotiert wird, aufweist und 0,26 g Si-Pulver (< 100 $\mu$m; FA. Merck KGaA), 0,34 g $CaCl_2$-Pulver (< 20 $\mu$m; Fa. Merck KGaA) und 0,45 g Fluorophlogopit (< 15 $\mu$m, synthetischer Glimmer, Fa. Merck KGaA) werden sorgfältig in einer PP Dose im DAC 150 FVZ Speedmixer der Firma Hauschild vermischt. Die Mischung wird gleichmäßig in einem Quarzglas Schiffchen verteilt. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 850 °C geregelt war und dort für 45 min belassen. Danach wird das Rohr aus dem Ofen entfernt und für 30 min im Stickstoffstrom abgekühlt. Das geglühte Pulver wird über ein 40 $\mu$m Sieb aufbereitet.

Als Vergleich wird eine Probe des nach der Fällung bei 110°C 18 h getrockneten Nb dotierten $TiO_2$ Pigments an Luft 45 min bei 850 °C geglüht. Auch dieses geglühte Pulver wird über ein 40 $\mu$m Sieb aufbereitet.

Tabelle 10:

| Beispiel | Pigment | Si | CaCl$_2$ | Fluorophlogopit | Temperatur | Zeit | N$_2$ |
|----------|---------|------|--------|-----------------|------------|--------|--------|
| 10a | 30 g | 0,34 g | 0,23 g | 0,45 g | 850 °C | 45 min | 55 l/h |
| 10b | 30 g | 0,17 g | 0,12 g | 0,23 g | 850 °C | 45 min | 55 l/h |

Beispiel 11: Nachbehandlung mit Natronlauge

250 g Effektpigment entsprechend Beispiel 2a werden in ca. 2000 ml VE-Wasser suspendiert (10-15 wt.%) und unter Rühren mit 900 min$^{-1}$ auf 70 °C erwärmt. Mit 32 %iger Natronlauge wird im Verlauf von 60 min ein pH-Wert von 11,0 eingestellt. Der pH wird nicht konstant gehalten, aber im Verlauf der nächsten 8 Stunden immer wieder durch Zudosieren von 32 %iger Natronlauge nachjustiert. Die Suspension wird noch warm filtriert und mit VE-Wasser so lange auf dem Filter nachgewaschen bis die Leitfähigkeit des Filtrats kleiner 200 $\mu$S/cm ist.

Das Material kann an dieser Stelle bei 90 °C für 16 Stunden getrocknet werden oder als wässrige Suspension direkt für eine Nachbeschichtung verwendet (vgl. Beispiel 13) werden.

Das Produkt hat sich farblich nicht verändert, ist aber wesentlich feiner und besser zu sieben. In der Lackkarte zeigt sich eine gleichmäßigere Verteilung der Pigmente.

Mit dem Mehrwinkel Farbe & Effekt Messung Gerät mac i BYK Instruments (byk-instruments.com) kann die Körnigkeit einer Pigment-Lack Applikation beurteilt werden. Dazu wird in dem Gerät unter diffuser Beleuchtung mittels CCD Chip ein Bild erzeugt und die entsprechende Hell/Dunkel Verteilung ausgewertet. Ein kleinerer Graininess-Wert beschreibt gleichmäßigere Oberflächen. Ein Grainiiness-Wert von $\leq$ 2,5 hat sich in den Applikationsanwendungen häufig als vorteilhaft erwiesen. Der Graininess-Faktor korreliert in der Regel sehr gut mit den optischen und mikroskopischen Beobachtungen.

Tabelle 11: Beeinflussung der Körnigkeit durch Laugung

| Beispiel | Dauer | Graininess (schwarz) |
|----------|-------|----------------------|
| 11a | 0 h | 2,66 |
| 11b | 3 h | 2,42 |
| 11c | 8 h | 2,18 |

Beispiel 12: Physikalische Eigenschaften / Radartransparenz

30 g Iriodin® 119 (mit $TiO_2$ beschichtete Glimmerplättchen mit einer Partikel-Größenverteilung von 5-25 $\mu$m, Fa. Merck KGaA) beziehungsweise die gleiche Menge 30 g Xirallic® Crystal Silver T50-10 (mit $TiO_2$ beschichtete Aluminium-oxid-Plättchen mit weißer Körperfarbe und silberweißen Reflektionen und einer Partikel-Größenverteilung von 15-22 $\mu$m, Fa. Merck KGaA), 0,34 g Si-Pulver (< 100 $\mu$m; Fa. Merck KGaA), 0,23 g $CaCl_2$-Pulver (< 20 $\mu$m; Fa. Merck KGaA) und 0,45 g Talkum (< 15 $\mu$m, Fa. Mondo) sowie 0,1 g $CaF_2$-Pulver (< 20 $\mu$m, Fa. Merck KGaA) werden sorgfältig in einer PP Dose im DAC 150 FVZ Speedmixer der Firma Hauschild vermischt. Die entsprechenden Mengen sind in Tabelle 11 gelistet. Die Mischung wird gleichmäßig in einem Quarzglas Schiffchen verteilt. Das Schiffchen wird in einem Quarzrohr (Innendurchmesser 5 cm, Länge 100 cm) platziert, das beidseitig mit Gaszuleitungen (Schliff-Olive-Adapter) versehen ist. Über den einen Zugang wird Stickstoff mit 55 l/h (1,75 bar) durch den Reaktionsraum geblasen und am anderen Ende durch ein Paar Waschflaschen, die so verschaltet waren, dass keine Flüssigkeit in den Ofen zurücksteigen kann, der Abluft zugeführt. Nach 15 min. wird das Rohr so in den Röhrenofen platziert, dass das Schiffchen mittig in der Heizzone steht, die auf eine Temperatur von 850 °C bzw. 875 °C geregelt war und dort für 45 min belassen. Danach wird das Rohr aus dem Ofen entfernt und für 30 min im Stickstoffstrom abgekühlt. Das geglühte Pulver wird über ein 40 μm Sieb aufbereitet.

Um die Radartransparenz der Lackschicht bewerten zu können, wird ein Lack mit 533,42 g WBC 000 von MIPA (Bindemittel) und 16,17 g Pigment (18% PMK) hergestellt und mittels pneumatischer Applikation in 3 Lagen auf einem 350 μm dicken Hostaphan RN 350 PET-Film (A4-Größe) von Mitsubishi Polyester Film GmbH aufgebracht. Die Schichtdicke des so erzeugten Filmes ist in Tabelle 12 gelistet.

Als Referenz wird sowohl die unbeschichtete PET-Folie (Beispiel 12h) als auch eine mit Aluminiumpigment (1:1 Mischung aus Stapa® IL Hydrolan 2156 und Stapa® IL Hydrolan 8154, Eckart) beschichtete Folie (Beispiel 12i), die in gleicher Präparation (18% PMK) wie oben beschrieben hergestellt wird, vermessen.

Die Messung der Permittivität der Beschichtung sowie der Ein-Wege-Transmissionsdämpfung der Beschichtung auf dem Substrat erfolgen mit einem Gerät vom Typ RMS-D-77/79G der Firma Perisens GmbH im Standardbetrieb.

In Tabelle 12 werden die Permittivität (Dielektrizitätszahl) und die Ein-Wege-Transmissionsdämpfung (in dB) eines Radarsignals durch die Schichtstruktur bestehend aus PET-Folie und aufgebrachter Lackschicht gelistet. Dabei wird nur eine einfache Passage des Radarstrahls berücksichtigt.

Der Pulverwiderstand wird in einer zylindrischen, elektrisch isolierenden Kunststoff-Messzelle ermittelt, bei der die Pulverprobe zwischen zwei elektrisch kontaktierten Stempeln mit einem 10 kg-Gewicht kompaktiert wird. Die Zelle wird so befüllt, dass sich nach dem Kompaktieren eine Probenhöhe in der Messzelle von ca. 1 cm ergibt. Die Höhe h in cm wird an einer Graduierung am Stempel ermittelt. Die Proben-Grundfläche ergibt sich aus den Abmessungen des Stempels mit seinem Durchmesser d=2cm. Der Widerstand R wird dem Messgerät 287 True RMS Multimeter von Fluke mit einer Spannung von 1V gemessen. Daraus wird der spezifische Pulverwiederstand ρs berechnet.

$$\rho s = R * \pi * (d/2)^2 / h$$

Tabelle 12: Synthese-Beispiele zur Erhebung physikalischer Eigenschaften

| Beispiel | Iriodin® 119 | Si | CaCl$_2$ | Talk | CaF$_2$ | Temp. | Zeit | N$_2$ |
|---|---|---|---|---|---|---|---|---|
| 12a | 30 g Iriodin® 119 | 0,26 g | 0,23 g | 0,45 g | 0,1 g | 850 °C | 45 min | 55 l/h |
| 12b | 30 g Iriodin®119 | 0,34 g | 0,23 g | 0,45 g | 0,15 g | 850 °C | 45 min | 55 l/h |
| 12c | 30 g Iriodin® 119 | 0,26 g | 0,23 g | 0,45 g | 0,15 g | 875 °C | 45 min | 55 l/h |
| 12d | 30 g Iriodin® 119 | 0,34 g | 0,23 g | 0,45 g | 0,20 g | 875 °C | 45 min | 55 l/h |
| 12e | 30 g Iriodin® 119 | 0,51 g | 0,23 g | 0,45 g | 0,20 g | 850 °C | 45 min | 55 l/h |
| 12f | 30 g Xirallic® Crystal Silver T50-10 | 0,34 g | 0,23 g | 0,45 g | 0,1 g | 850 °C | 45 min | 55 l/h |
| 12g | 30 g Xirallic® Crystal Silver T50-10 | 0,67 g | 0,46 g | 0,45 g | 0,1 g | 850 °C | 45 min | 55 l/h |

Tabelle 13: Physikalische Eigenschaften der Beispiele 12a-i

| Beispiel | Helligkeit L*15°,s | Spez. Pulverwiderstand | Schichtdicke | Rel. Permittivität bei 76,5 GHz | Ein-Wege-Transmissions-dämpfung bei 76,5 GHz |
|---|---|---|---|---|---|
| 12a | 124,928 | 6,02*10$^6$ Ohm*cm | 13,26 μm | 5,318 | 1,20 dB |
| 12b | 123,158 | 4,08*10$^6$ Ohm*cm | 11,78 μm | 7,317 | 1,22 dB |
| 12c | 120,274 | 4,11*10$^6$ Ohm*cm | 12,73 μm | 7,017 | 1,21 dB |
| 12d | 118,367 | 1,28*10$^6$ Ohm*cm | 11,89 μm | 8,297 | 1,25 dB |

(fortgesetzt)

| Beispiel | Helligkeit L*15°,s | Spez. Pulverwiderstand | Schichtdicke | Rel. Permittivität bei 76,5 GHz | Ein-Wege-Transmissions-dämpfung bei 76,5 GHz |
|---|---|---|---|---|---|
| 12e | 100,143 | $2,15*10^4$ Ohm*cm | 12,00 $\mu$m | 8,272 | 1,25 dB |
| 12f | 102,292 | $9,64*10^6$ Ohm*cm | 11,88 $\mu$m | 7,402 | 1,20 dB |
| 12g | 59,4661 | $6,96*10^5$ Ohm*cm | 14,07 $\mu$m | 7,605 | 1,30 dB |
| 12h | - | - | - | 3,122 | 1,05 dB |
| 12i | 150,085 | - | 21,8 $\mu$m | 94,782 | 3,73 dB |

Die Beispiele zeigen alle eine klare Reduktion der der Abschwächung des Radarsignals bei Verwendung der Glimmer- oder Aluminiumoxid basierten Pigmente (Beispiele 12a-g) im Vergleich zu den Aluminiumpigmenten (Vergleichsbeispiel 12i). Die üblicherweise verwendete Angabe des Maßes der Dämpfung bei Pegeln, Leistungen oder Feldern in Dezibel (dB) bedeutet hier für den Fall der Aluminium-Pigmentierung (Beispiel 12i) einen Wert von 3,73 dB, der den Verlust von über 57 % der ursprünglichen Leistung des Radarstrahls bei einer einmaligen Passage beschreibt. Bei den erfindungsgemäßen Pigmenten (Beispiele 12a-g) liegt dagegen die Dämpfung bei 1,20-1,30, was einem Verlust von unter 26 % der ursprünglichen Leistung bei einer einmal Passage entspricht. Aber auch die PET-Trägerfolie hat bei einer Ein-Wege-Dämpfung von 1,05 schon einen Anteil von 21,5 % daran. Eine Pigmentierung mit den erfindungsgemäßen Pigmenten trägt also deutlich zur Realisierung von radarfähigen Lackformulierungen bei.

Beispiel 13: Nachbeschichtung

150 g Effektpigment aus Beispiel 2a werden in 1350 ml VE-Wasser unter Rühren (= 10 % Pigment-Suspension) bei 700 min$^{-1}$ und Raumtemperatur suspendiert. Die Temperatur des Ansatzes wird auf 75 °C eingestellt (45 min).

Nach Suspendierung des Pigmentes wird mit Schwefelsäure (5 %ig) ein pH-Wert von 6,8 eingestellt und 15 Minuten nachgerührt. Falls nötig wird der pH-Wert mit NaOH oder $H_2SO_4$ korrigiert.

Mit einer Ismatec-Schlauchpumpe wird bei 75 °C eine Aluminiumchlorid-Lösung, aus 6,8 g $AlCl_3 * 6H_2O$ (Fa. Merck KGaA) in 60 g VE-Wasser gleichmäßig, innerhalb von 120 min zudosiert. Der pH-Wert wird dabei mit Natronlauge (5 %ig) konstant bei 6,8 gehalten. Nachrührzeit 10 Minuten, pH-Wert bei 6,80 halten.

Mit wenig $H_2SO_4$ (5 %ig) wird der pH langsam (5 min) auf pH 6,3 eingestellt. Nachrührzeit 5min, pH auf 6,3 halten.

Mit der Ismatec-Schlauchpumpe wird bei 75°C eine Natronwasserglas-Lösung, die aus 8,4 g 27 %iger Natronwasserglas-Lösung (Fa. Merck KGaA) und 60 g VE Wasser verdünnt wird, gleichmäßig, innerhalb von 120 min zudosiert. Der pH-Wert wird dabei mit Schwefelsäure (5 %ig) konstant bei 6,3 gehalten. Nachrührzeit 20 Minuten, pH-Wert bei 6,30 halten.

Mit wenig NaOH (5 %ig) wird der pH-Wert langsam auf pH 8,0 eingestellt. Nachrührzeit 5 min, pH auf 8,0 halten.

Mittels eines Tropftrichters wird die Mischung aus 3,0 g 2-(3,4-Epoxycyclohexyl)ethyltrimethoxysilane (ABCR; AB111130) und 3,0 g 3-Isocyanatopropyltriethoxysilane (ABCR; 111201) gleichmäßig innerhalb von 60 min bei 75 °C und unter Rühren (700 min$^{-1}$) zugegeben. Der pH-Wert 8,0 wird durch Zudosieren von 5% iger Natronlauge konstant gehalten. Nachrührzeit 45 Minuten ohne pH Reglung. Heizung und Rührer wird abgeschaltet. Die Probe darf sedimentieren.

Die Suspension wird direkt auf eine Nutsche abgelassen, filtriert und portionsweise mit 6 x 1l kaltem VE-Wasser gewaschen. Bis die Leitfähigkeit einen Wert von 30 $\mu$S/cm unterschreitet.

Zuletzt wird das Produkt trockengesaugt.

Im Anschluss erfolgt die 16-stündige Trocknung des Pigments mit geringer Schichtdicke (3-4cm) in einer Porzellanschale im Umlufttrockenschrank, der auf 150°C vorgeheizt ist.

Das getrocknete Produkt wird portionsweise über ein Retsch-Sieb, Maschenweite 40 $\mu$m gesiebt. Die Ausbeute beträgt 154 g nachbeschichtetes Produkt.

Das Produkt hat sich farblich nicht verändert, ist aber wesentlich feiner und frei fließend. In der Lackkarte zeigt sich eine gleichmäßigere Verteilung der Pigmente.

Im anschließenden Bewitterungstest (SAEJ 2527) in Lacksystemen von den Lackherstellern PPG und Axalta zeigt sich die gute Stabilität des Materials aus Beispiel 2 mit nur geringfügigen Verschiebungen in Farbigkeit und Deckfähigkeit nach 2000 und 4000 Stunden.

<u>Präparation der Lackkarte / Farbmessung</u>

Um die Farbmetrik der nach dieser Erfindung beschriebenen Pigmente beurteilen zu können, werden 0,9 g jeder Pigment-Probe in 53,6 g eines Nitrocellulose-Acrylharz-Lackes eingearbeitet und mit Hilfe eines Speedmixers (Hauschild, 2 min, 2800 Upm) homogenisiert und von Luftblasen befreit. Die Pigment-Lack-Mischung wird mit einem Lack-Auftragsgerät (Applikator) in 500 μm Nassfilmdicke auf eine schwarz-weiße Karte aufgezogen.

Die Karten werden mit einem Mehrwinkel-Spektralphotometer (Byk Mac-i von Byk-Gardner) vermessen. Folgende Werte werden hier tabellarisch erfasst:

- L*15°s-, a*15°s-, b*15°s-Werte für Helligkeit, rot-grün- und blau-gelb-Ton der Lackpräparation (CIELAB Farbraum nach EN ISO 11664-4); hier angegeben die Werte über der Schwarzkarte (s) gemessen in 15° vom Glanzpunkt.
- Je weniger der Unterschied zwischen dem schwarzen und dem weißen Untergrund auf der Lackkarte zu erkennen ist, desto deckender ist das Pigment.DE(75°) = ((L*75°s - L*75°w)^2 + (a*75°s - a*75°w)^2 + (b*75°s - b*75°w)^2 )^0,5 ; Farbabstand als Maß für das Deckvermögen gemessen über den entsprechenden Teilen einer Lackpräparation auf einer Schwarz-Weißkarte (s=schwarz, w=weiss) bei 75° zurück vom Glanzwinkel.

Mit dem Farbabstand ΔE(75°)

$$\Delta E75° = \sqrt{(L_*75°,s - L_*75°,w)^2 + (a_*75°,s - a_*75°,w)^2 + (b_*75°,s - b_*75°,w)^2}$$

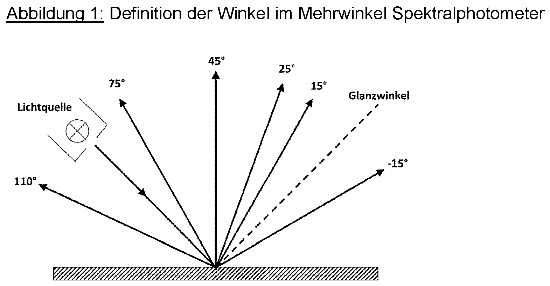

im Mehrwinkel-Spektralphotometer (Abb. 1) kann also der Unterschied in der Erscheinung einer Pigmentpräparation über einem schwarzen oder weißen Untergrund angegeben werden. Wäre die Pigmentpräparation absolut deckend, dann wird auch kein Unterschied messbar sein ΔE(75°) = 0. Je kleiner der Wert für ΔE(75°) desto deckfähiger ist die Präparation. Im Übrigen müssen immer die gleichen Konditionen eingestellt werden: Gleiche Konzentration an Pigmenten, gleiche Filmdicke, gleiche Lichtverhältnisse (Vorzugsweise auch gleiches Messgerät). Pigmente mit unterschiedlichem Aufbau (Größe, Morphologie) lassen sich nur bedingt vergleichen.

Tabelle 14: Ergebnis der Farbmessung der Beispiele 1-11

| Beispiel | Farbeindruck (Massenfarbton/ Interferenz) | L*15°,s | a*15°,s | b*15°,s | ΔE(75°) |
|---|---|---|---|---|---|
| 1a | silberweiß | 130,794 | -1,5588 | 0,86179 | 33,0069 |
| 1b | helles silbergrau | 125,291 | -3,3362 | -2,9362 | 20,4397 |
| 1c | dunkles silbergrau, grünlich | 95,638 | -6,3656 | -2,4150 | 16,4632 |
| 2a | metallisch silbergrau, deckend | 121,075 | -5,4263 | -6,4909 | 14,1355 |
| 2b | metallisch silbergrau, deckend | 122,681 | -5,0550 | -6,3456 | 14,0828 |
| 2c | helles silbergrau | 108,625 | -6,3109 | -8,5803 | 10,8327 |
| 2d | dunkles silbergrau, deckend, grünblau Stich | 128,170 | -3,0631 | -2,8897 | 21,8288 |
| 2e | metallisch silbergrau | 128,818 | -3,2612 | -2,8564 | 16,7317 |
| 3a | dunkles silbergrau, glänzend | 109,128 | -5,8185 | -7,6113 | 16,3733 |
| 3b | dunkles silbergrau, glänzend | 103,134 | -5,9201 | -8,5930 | 13,0281 |
| 3c | dunkles silbergrau | 98,920 | -5,1996 | -7,8836 | 13,3533 |
| 3d | dunkles silbergrau, matt | 86,428 | -4,9152 | -7,3967 | 13,9626 |
| 4a | metallisches silbergrau | 130,083 | -2,8079 | -2,1474 | 22,6101 |
| 4b | metallisches silbergrau | 128,818 | -3,2612 | -2,8564 | 16,7317 |
| 4c | metallisches silbergrau | 124,734 | -4,1414 | -3,963 | 25,5664 |
| 4d | metallisches silbergrau | 128,487 | -3,8098 | -3,0931 | 21,7965 |
| 4e | metallisches silbergrau | 125,729 | -3,9067 | -4,5057 | 16,9368 |
| 4f | metallisches silbergrau | 124,928 | -3,9414 | -3,9554 | 22,3764 |
| 5a | blaugrün deckend mit grauer Absorption | 83,577 | -32,7180 | -14,2921 | 27,8198 |

(fortgesetzt)

| Beispiel | Farbeindruck (Massenfarbton/ Interferenz) | L*15°,s | a*15°,s | b*15°,s | ΔE(75°) |
|---|---|---|---|---|---|
| 5b | kupferfarben mit grauer Absorption | 84,921 | 21,2288 | 32,4789 | 30,1374 |
| 6a | starker Flop von fliederfarben zu blassgrün | 114,996 | 23,6077 | -10,6120 | 46,4615 |
| 6b | dunkles grau mit schwachem rot Flop | 66,612 | 15,2982 | -4,5213 | 20,6382 |
| 7a | silberweis, sparkling | 99,604 | -3,7759 | -12,789 | 68,8353 |
| 7b | blau, sparkling | 80,794 | -14,4830 | -40,565 | 73,4639 |
| 8a | dunkelgrau, grünlich | 75,222 | -3,5493 | -1,8886 | 18,7557 |
| 8b | metallisches silbergrau | 117,047 | -4,6647 | -2,3193 | 24,5514 |
| 9a | dunkles grau, blaustichig, sparkling | 53,506 | -1,6414 | -6,4517 | 29,8865 |
| 9b | dunkles grau, blaustichig, sparkling | 59,525 | -2,7381 | -9,2656 | 29,0954 |
| 9c | dunkles metallic grau, sparkling | 100,972 | -4,0929 | -0,1547 | 36,3248 |
| 10a | blaue Interferenz, graue Absorption | 78,095 | -16,7380 | -55,7210 | 73,5777 |
| 10b | Türkise Interferenz, graue Absorption | 129,652 | -1,5802 | 0,9810 | 32,9674 |
| 11a | metallisches silbergrau | 121,786 | -4,7994 | -5,1356 | 16,7784 |
| 11b | metallisches silbergrau | 122,029 | -4,8114 | -5,3089 | 16,1778 |
| 11c | metallisches silbergrau | 122,321 | -4,8019 | -5,1034 | 14,5690 |
| 12a | metallisches silbergrau | 124,928 | -3,94136 | -3,95538 | 23,4848 |
| 12b | metallisches silbergrau | 123,158 | -5,2617 | -6,82431 | 12,9753 |
| 12c | metallisches silbergrau | 120,274 | -5,51656 | -7,00471 | 16,3388 |
| 12d | metallisches silbergrau, blaustichig | 118,367 | -6,06488 | -8,3777 | 12,5019 |
| 12e | dunkles silbergrau, blaustickig, deckend, | 100,143 | -6,67983 | -10,4283 | 10,1037 |
| 12f | helles metallic grau, sparkling | 102,292 | -4,8247 | 0,25455 | 36,5934 |
| 12g | dunkles metallic grau, sparkling | 59,4661 | -0,78445 | -2,58981 | 27,2185 |

Tabelle 15: Farbmessung der eingesetzten, unbehandelten Pigmente zum Vergleich

| Pigment | Farbe (Beschreibung) | L*15°s | a*15°s | b*15°s | ΔE(75°) |
|---|---|---|---|---|---|
| Iriodin® 119 | farblos, silberweis | 135,148 | -1,2241 | 1,0278 | 33,0207 |
| Iriodin® 231 | helles gelbgrün, transparent | 102,539 | -29,2051 | 11,218 | 49,0022 |
| Iriodin® 211 | helles rot mit leichtem Blaustich, transparent | 85,132 | 44,2422 | -2,2860 | 59,6073 |
| Colorstream® T10-02 | starker Flop von fliederfarben zu blassqrün | 119,698 | 19,7839 | -11,9320 | 47,9943 |
| Miraval® 5311 | silberweis, sparkling | 96,373 | -3,6883 | -11,1713 | 72,1781 |
| Miraval® 5402 | türkis, sparkling | 84,996 | -29,2641 | -31,783 | 76,6108 |
| Iriodin® 6123 | helles silberweiß, transparent | 127,973 | -2,5298 | -1,5881 | 42,0532 |
| Xirallic® T50-10 | farblos, silberweiß, sparkling | 115,686 | -4,6650 | -3,0320 | 54,8363 |

Quantitativer F- Nachweis:

Probenvorbereitung/Messung: Jeweils ca. 2 mg der Probe (6-Fachbestimmung) werden auf ein Quarzboot mit Opfervial eingewogen und mittels der CIC (combustion ion chromatography) im Sauerstoffstrom bei Ofentemperaturen von 1050°C verbrannt. Die Gase werden in einer Absorptionslösung ($H_2O_2$-Lösung) aufgefangen; oxidiert und die Anionen mittels IC gemessen.

Die Quantitative Fluoridbestimmung über eine Verbrennungs-Ionenchromatographie liefert Werte von 550 bis 950 μg Fluorid pro 1g Probe (entspricht 0,003 bis 0,005 at% Fluorid).

Tabelle 16: Ergebnisse der Fluorid Analytik

| Beispiel | Fluorid-Dotierung (Mittelwert) | |
| --- | --- | --- |
| | μg/g | at% |
| 2a | 714 | 0,0038 |
| 4b | 576 | 0,0030 |
| 4d | 910 | 0,0048 |

Anwendungsbeispiele (AB)

Beispiel AB1: Autolack

Das Pigment aus Beispiel 12 wird in den MIPA WBC 000 Basis Lack (MIPA SE) eingerührt. Abhängig vom angestrebten Farbton wird eine bestimmte Menge Pigment verwendet. Um einen Vollton zu erzeugen, werden vom genannten Pigment aus Beispiel 12 2 Gew.% in der Formulierung genutzt. Es kann sich als notwendig erweisen, den Lack durch Verdünnen mit destilliertem Wasser auf eine Sprüh-Viskosität von 70-75 mPa · s bei 1000 s$^{-1}$ einzustellen. Der pigmentierte Basislack wird durch Sprühbeschichtung auf schwarz-weiße T21G Metall-Bleche der Firma Leneta aufgebracht. Dazu werden die automatisierte Sprüh-Applikation Oerter APL 4.6 mit DeVilbiss AGMD2616 Spritzpistole (1,4 mm Düse, 767c Kappe) verwendet. Der Spraydruck ist 4200 mbar, der Materialfluss etwa 110 ml/min und der Abstand zwischen Spritzpistole und Substrat ungefähr 30 cm. Die Spritzpistole wird mit 0,45 m/s bewegt, wobei drei Schichten im zeitlichen Abstand von 30 Sekunden aufgebracht werden. Die resultierende Trockenfilmdicke stellt sich bei 10-20 μm, bevorzugt 11-15 μm ein. Nach einer Vortrocknung der pigmentierten Schicht bei Raumtemperatur unter Luftzirkulation wird ein Klarlack oberhalb dieses Basislacks aufgebracht und die komplette Beschichtung wird eingebrannt.

Die Bleche zeigen eine helle, silbergraue Erscheinung mit guter Deckfähigkeit und im Abkippen einen starken hell-dunkel Effekt.

Beispiel AB2: Lösemittelbasierter Tiefdruck auf Karton

90 g Pigment aus Beispiel 12 werden mit 200 g Bindemittel Siegwerk NC TOB OPV 00 in einem Taumelmischer RRM Mini-II der Firma Engelsmann für 5 min vermischt. Anschließend wird mit mind. 125 g eines Lösemittelgemisches aus Ethanol und Ethylacetat 2:1 (v/v) zum Einstellen der Viskosität mit einem Visco-Jet Rührer bei 1200 Upm homogenisiert. Die Viskosität wird mit einem DIN4 Auslauf-Becher auf eine Auslaufzeit von 17 s (23°C) eingestellt in dem das gleiche Lösemittelgemisch bis zu 200 g ergänzt wird. Die so hergestellte Druckfarbe wird auf handelsüblichen Industrie-Druckmaschinen mit einem Tiefdruckzylinder der elektromechanisch mit 70 Linien/cm, Durchstich und Quernäpfen graviert ist verwendet. Als Substrat eignen sich sowohl Folie als auch gestrichenes Papier und gestrichener Karton. Das Ergebnis ist, auch auf schwarzem Karton, ein gleichmäßig deckendes Druckbild mit scharfen Kanten von hellem silbergrau mit metallischer Erscheinung.

Beispiel AB3: Kunststoff-Granulat für Spritzguss

494 g Polyethylen (PE-HD) Granulat Purell GA 776 von Lyondell Basell werden mit 1 g Process Aid-24 von ColorMatrix (Haftvermittler) in einem Taumelmischer RRM Mini-II der Firma Engelsmann für 5 min gemischt, dann werden 5 g Pigment aus Beispiel 12 zugegeben und es wird weitere 5 min gemischt. Das so vorbereitete Trocken-Gemisch wird für den Spritzguss von 9 * 6 * 0,1 cm großen Kunststoff-Probeplättchen verwendet, die den gleichmäßigen, metallisch silbernen Glanz des Beispielpigments zeigen.

Beispiel AB4: Lippenstift

| Phase | Gew % | Name (Inhaltsstoffe) |
| --- | --- | --- |
| A | 15,00 % | Pigment aus Beispiel 4b |
| B | 10,60 % | Wachs gebleicht (Cera alba) |
| | 6,36 % | Paracera C44 (Carnauba Wachs - Copernicia Cerifera) |
| | 4,24 % | Lanolin (Adeps Lanae) |
| | 6,78 % | Isopropylmyristat |
| | 2,55 % | Parafin dickflüssig (Mineralöl-Basis) |

EP 4 389 828 B1

(fortgesetzt)

| Phase | Gew % | Name (Inhaltsstoffe) |
|---|---|---|
| | 0,06 % | Oxynex® K flüssig (PEG-8, Tocopherol, Ascorbyl palmitate, Ascorbic acid, Citric acid) |
| | 1,21 % | Sensiva® PA 20 (2-Phenylethanol, Ethylhexylglycerin) |
| | 53,00 % | Rizinusöl (Ricinus Communis) |
| C | 0,20 % | Fragrance Tendresse #75418C (Parfüm) |

Die Bestandteile der Phase B werden auf 75 °C erhitzt und aufgeschmolzen. Das Pigment (Phase A) aus Beispiel 4b wird zugegeben und alles wird gut durchrührt. Die Lippenstiftmasse wird dann in der auf 65 °C temperierten Gießapparatur mit dem Parfüm aus Phase C 15 Minuten gerührt. Die homogene Schmelze wird in die auf 55 °C vorgewärmten Gießformen gegossen. Anschließend kühlt man die Formen ab und entfernt die Gießlinge kalt.

Das Anwendungsbeispiel ergibt einen silberfarbenen Lippenstift, der sehr deckend mit metallischem Glanz appliziert wird.

Beispiel AB5: Nagellack

| Rohstoff | Hersteller | Zusammensetzung (INCI) | % |
|---|---|---|---|
| Pigment Beispiel 7b | Merck KGaA | - | 2,00 |
| Thixotrope Nagellack-Base 12898 | International Lacquers | Toluene, Ethyl Acetate, Butyl Acetate, Nitrocellulose, Tosylamide/Formaldehy de Resin, Dibutyl Phthalate, Isopropyl Alcohol, Stearalkonium Hectorite, Camphor, Acrylates Copolymer, Benzophenone-1 | 98,00 |

0,5 g des Pigments aus Beispiel 7b werden zusammen mit 24,5 g der Nagellack-Basis REF BASE 12898 von International Lacquers nailpolish&care eingewogen, gut mit einem Spatel von Hand vermischt und anschließend 4 min bei 1200 U/min im Speedmixer DAC 150 FVZ der Firma Hauschild homogenisiert.

**Patentansprüche**

1. Effektpigment basierend auf einem plättchenförmigen Substrat,
**dadurch gekennzeichnet, dass** es mindestens eine $TiO_2$-Schicht enthält, in der das $TiO_2$ mit $Ti^{III+}$ und Fluorid dotiert ist.

2. Effektpigment nach Anspruch 1, **dadurch gekennzeichnet, dass** das plättchenförmige Substrat ausgewählt ist aus der Gruppe synthetische oder natürliche Glimmerplättchen, Schichtsilikate, Glasplättchen, $SiO_2$-Plättchen, $Al_2O_3$-Plättchen, $TiO_2$-Plättchen, Graphit-Plättchen, und BiOCl-Plättchen.

3. Effektpigment nach Anspruch 1 oder 2, **dadurch gekennzeichnet, dass** die synthetischen Glimmerplättchen, Glasplättchen, $TiO_2$-Plättchen, $SiO_2$-Plättchen, $Al_2O_3$-Plättchen dotiert oder undotiert sind.

4. Effektpigment nach einem oder mehreren der Ansprüche 1 bis 3,
**dadurch gekennzeichnet, dass** der Anteil der Dotierung in den plättchenförmigen Substraten 0,01- 5 Gew.% beträgt bezogen auf das Substrat.

5. Effektpigment nach einem oder mehreren der Ansprüche 1 bis 4,

**dadurch gekennzeichnet, dass** der Grad der Dotierung mit $Ti^{III+}$ und Fluorid in der $TiO_2$-Schicht gemäß der Formel $TiF_yO_{2-x-y}$,
wobei

$$0{,}00001 < y < 0{,}05$$

und

$$0{,}0001 < x < 0{,}1$$

bedeuten,
beträgt.

6. Effektpigment nach einem oder mehreren der Ansprüche 1 bis 5, **dadurch gekennzeichnet, dass** das Pigment folgenden Schichtaufbau besitzt:

- Substrat + $TiO_2$
- Substrat + $SnO_2$ + $TiO_2$
- Substrat + $TiO_2$ + $SiO_2$ + $TiO_2$
- Substrat + $SnO_2$ + $TiO_2$ + $SiO_2$ + $SnO_2$ + $TiO_2$
- Substrat + $TiO_2$ + MgO + $TiO_2$
- Substrat + $SnO_2$ + $TiO_2$ + MgO + $SnO_2$ + $TiO_2$
- Substrat + $TiO_2$ + CaO + $TiO_2$
- Substrat + $SnO_2$ + $TiO_2$ + CaO + $SnO_2$ + $TiO_2$
- Substrat + $TiO_2$ + SrO + $TiO_2$
- Substrat + $SnO_2$ + $TiO_2$ + SrO + $SnO_2$ + $TiO_2$
- Substrat + $TiO_2$ + BaO + $TiO_2$
- Substrat + $SnO_2$ + $TiO_2$ + BaO + $SnO_2$ + $TiO_2$
- Substrat + $TiO_2$ + ZnO + $TiO_2$
- Substrat + $SnO_2$ + $TiO_2$ + ZnO + $SnO_2$ + $TiO_2$,

wobei mindestens eine $TiO_2$-Schicht mit $Ti^{III+}$ und Fluorid dotiert ist.

7. Effektpigment nach einem oder mehreren der Ansprüche 1 bis 6, **dadurch gekennzeichnet, dass** eine oder mehrere $TiO_2$-Schichten des Effektpigments zusätzlich mit Niob, Zirkon, Yttrium, Magnesium, Calcium, Strontium, Barium, Zink, Indium oder Antimon dotiert sind.

8. Effektpigment nach einem der Ansprüche 1 bis 7, **dadurch gekennzeichnet, dass** das Pigment weiterhin auf der Oberfläche mit einer organischen oder anorganischen Beschichtung als äußere Schicht versehen ist.

9. Verfahren zur Herstellung des Effektpigments nach einem oder mehreren der Ansprüche 1 bis 7, **dadurch gekennzeichnet, dass** ein Effektpigment basierend auf einem plättchenförmigen Substrat enthaltend mindestens eine $TiO_2$-Schicht in Gegenwart eines Fluorid-Donors und eines festen Reduktionsmittels und ggf. eines Schmelzsalzes in einem reduzierenden Gasgemisch bei Temperaturen von 700. - 900 °C umgesetzt wird.

10. Verfahren nach Anspruch 9, **dadurch gekennzeichnet, dass** der Fluorid-Donor ausgewählt ist aus der Gruppe anorganische Fluoride, fluororganische Verbindungen, natürliche und synthetische fluorhaltige Minerale.

11. Verfahren nach Anspruch 9 oder 10, **dadurch gekennzeichnet, dass** das Reduktionsmittel ausgewählt ist aus der Gruppe Erdalkalimetalle, B, Al, Si, Zn, Fe, LiH, $CaH_2$, $NaBH_4$, MgSi, $MgSi_2$, $Ca_2Si$, $CaSi_2$.

12. Verwendung des Effektpigments nach einem oder mehreren der Ansprüche 1 bis 8 in Lacken, Pulverlacken, Farben, Kunststoffen, Folien, für radartransparente Lackierungen, für elektrostatisch ableitfähige Formulierungen, zur Beschichtung von Radar-Sensoren, in Druckfarben, im Sicherheitsdruck, in Sicherheitsmerkmalen in Dokumenten und Ausweisen, zur Saatguteinfärbung, zur Lebensmitteleinfärbung oder in Arzneimittelüberzügen, zur Lasermarkierung sowie zur Herstellung von Pigmentpräparationen und Trockenpräparaten, in kosmetischen Formulierungen, in Hochtemperaturanwendungen, in Pigmentpräparationen.

13. Verwendung des Effektpigments nach einem oder mehreren der Ansprüche 1 bis 8 in Abmischung mit organischen oder anorganischen Farbstoffen und/oder Pigmenten.

**14.** Verwendung des Effektpigments nach Anspruch 13 in Abmischung mit Aluminiumpigmenten.

**15.** Formulierungen enthaltend das Effektpigment nach einem oder mehreren der Ansprüche 1 bis 8.

**16.** Formulierungen nach Anspruch 15, **dadurch gekennzeichnet, dass** sie neben dem Effektpigment nach einem oder mehreren der Ansprüche 1 bis 8 mindestens einen Bestandteil ausgewählt aus der Gruppe Absorptionsmittel, Adstringenzien, antimikrobielle Stoffe, Antioxidantien, Antischaummittel, Antistatika, Bindemittel, biologische Zusatzstoffe, Bleichmittel, Chelatbildner, Desodorierungsmittel, Emollentien, Emulgatoren, Emulsionsstabilisatoren, Farbstoffe, Feuchthaltemittel, Filmbildner, Füllstoffe, Geruchsstoffe, Geschmacksstoffe, Insect Repellents, Konservierungsmittel, Korrosionsschutzmittel, kosmetische Öle, Lösungsmittel, Oxidationsmittel, pflanzliche Bestandteile, Puffersubstanzen, Reduktionsmittel, Tenside, Treibgase, Trübungsmittel, UV-Filter, UV-Absorber, Vergällungsmittel, Viskositätsregler, Parfüme, Vitamine, Enzyme, Spurenelemente, Proteine, Kohlenhydrate, organische Pigmente, anorganische Pigmente, Ruß, Effektpigmente, Metallpigmente, Metalleffektpigmente, enthalten.

**Claims**

**1.** Effect pigment based on a flake-form substrate, **characterised in that** it comprises at least one $TiO_2$ layer in which the $TiO_2$ is doped with $Ti^{III+}$ and fluoride.

**2.** Effect pigment according to Claim 1, **characterised in that** the flake-form substrate is selected from the group synthetic or natural mica flakes, phyllosilicates, glass flakes, $SiO_2$ flakes, $Al_2O_3$ flakes, $TiO_2$ flakes, graphite flakes and BiOCl flakes.

**3.** Effect pigment according to Claim 1 or 2, **characterised in that** the synthetic mica flakes, glass flakes, $TiO_2$ flakes, $SiO_2$ flakes, $Al_2O_3$ flakes are doped or undoped.

**4.** Effect pigment according to one or more of Claims 1 to 3, **characterised in that** the proportion of doping in the flake-form substrates is 0.01-5% by weight, based on the substrate.

**5.** Effect pigment according to one or more of Claims 1 to 4, **characterised in that** the degree of doping with $Ti^{III+}$ and fluoride in the $TiO_2$ layer is in accordance with the formula $TiF_yO_{2-x-y}$, where

$$0.00001 < y < 0.05$$

and

$$0.0001 < x < 0.1.$$

**6.** Effect pigment according to one or more of Claims 1 to 5, **characterised in that** the pigment has the following layer structure:

- substrate + $TiO_2$
- substrate + $SnO_2$ + $TiO_2$
- substrate + $TiO_2$ + $SiO_2$ + $TiO_2$
- substrate + $SnO_2$ + $TiO_2$ + $SiO_2$ + $SnO_2$ + $TiO_2$
- substrate + $TiO_2$ + $MgO$ + $TiO_2$
- substrate + $SnO_2$ + $TiO_2$ + $MgO$ + $SnO_2$ + $TiO_2$
- substrate + $TiO_2$ + $CaO$ + $TiO_2$
- substrate + $SnO_2$ + $TiO_2$ + $CaO$ + $SnO_2$ + $TiO_2$
- substrate + $TiO_2$ + $SrO$ + $TiO_2$
- substrate + $SnO_2$ + $TiO_2$ + $SrO$ + $SnO_2$ + $TiO_2$
- substrate + $TiO_2$ + $BaO$ + $TiO_2$
- substrate + $SnO_2$ + $TiO_2$ + $BaO$ + $SnO_2$ + $TiO_2$
- substrate + $TiO_2$ + $ZnO$ + $TiO_2$
- substrate + $SnO_2$ + $TiO_2$ + $ZnO$ + $SnO_2$ + $TiO_2$,

where at least one $TiO_2$ layer is doped with $Ti^{III+}$ and fluoride.

7. Effect pigment according to one or more of Claims 1 to 6, **characterised in that** one or more $TiO_2$ layers of the effect pigment are additionally doped with niobium, zirconium, yttrium, magnesium, calcium, strontium, barium, zinc, indium or antimony.

8. Effect pigment according to one of Claims 1 to 7, **characterised in that** the pigment is furthermore provided on the surface with an organic or inorganic coating as outer layer.

9. Process for the preparation of the effect pigment according to one or more of Claims 1 to 7, **characterised in that** an effect pigment based on a flake-form substrate comprising at least one $TiO_2$ layer is reacted in the presence of a fluoride donor and a solid reducing agent and optionally a molten salt in a reducing gas mixture at temperatures of 700 - 900°C.

10. Process according to Claim 9, **characterised in that** the fluoride donor is selected from the group inorganic fluorides, organofluorine compounds, natural and synthetic fluorine-containing minerals.

11. Process according to Claim 9 or 10, **characterised in that** the reducing agent is selected from the group alkaline-earth metals, B, Al, Si, Zn, Fe, LiH, $CaH_2$, $NaBH_4$, MgSi, $MgSi_2$, $Ca_2Si$, $CaSi_2$.

12. Use of the effect pigment according to one or more of Claims 1 to 8 in paints, powder coatings, inks, plastics, films, for radar-transparent finishes, for electrostatically dissipative formulations, for the coating of radar sensors, in printing inks, in security printing, in security features in documents and identity papers, for colouring seed, for colouring foods or in medicament coatings, for laser marking and for the preparation of pigment preparations and dry preparations, in cosmetic formulations, in high-temperature applications, in pigment preparations.

13. Use of the effect pigment according to one or more of Claims 1 to 8 in a mixture with organic or inorganic dyes and/or pigments.

14. Use of the effect pigment according to Claim 13 in a mixture with aluminium pigments.

15. Formulations comprising the effect pigment according to one or more of Claims 1 to 8.

16. Formulations according to Claim 15, **characterised in that**, besides the effect pigment according to one or more of Claims 1 to 8, they comprise at least one constituent selected from the group absorbents, astringents, antimicrobial substances, antioxidants, antifoaming agents, antistatics, binders, biological additives, bleaches, chelating agents, deodorisers, emollients, emulsifiers, emulsion stabilisers, dyes, humectants, film formers, fillers, fragrances, flavours, insect repellents, preservatives, anticorrosion agents, cosmetic oils, solvents, oxidants, plant constituents, buffer substances, reducing agents, surfactants, propellant gases, opacifiers, UV filters, UV absorbers, denaturing agents, viscosity regulators, perfumes, vitamins, enzymes, trace elements, proteins, carbohydrates, organic pigments, inorganic pigments, carbon black, effect pigments, metal pigments, metal-effect pigments.

**Revendications**

1. Pigment à effets à base d'un substrat en forme de paillettes, **caractérisé en ce qu'**il comprend au moins une couche de $TiO_2$ où le $TiO_2$ est dopé au $Ti^{III+}$ et au fluorure.

2. Pigment à effets selon la revendication 1, **caractérisé en ce que** le substrat en forme de paillettes est choisi dans le groupe constitué par les paillettes de mica synthétique ou naturel, les phyllosilicates, les paillettes de verre, les paillettes de $SiO_2$, les paillettes de $Al_2O_3$, les paillettes de $TiO_2$, les paillettes de graphite et les paillettes de BiOCl.

3. Pigment à effets selon la revendication 1 ou 2, **caractérisé en ce que** les paillettes de mica synthétique, les paillettes de verre, les paillettes de $TiO_2$, les paillettes de $SiO_2$, les paillettes de $Al_2O_3$ sont dopées ou non dopées.

4. Pigment à effets selon l'une ou plusieurs parmi les revendications 1 à 3, **caractérisé en ce que** la proportion de dopage dans les substrats en forme de paillettes est de 0,01-5% en poids, sur la base du substrat.

5. Pigment à effets selon l'une ou plusieurs parmi les revendications 1 à 4, **caractérisé en ce que** le degré de dopage au $Ti^{III+}$ et au fluorure dans la couche de $TiO_2$ est conforme à la formule $TiF_yO_{2-x-y}$, dans laquelle

$$0,00001 < y < 0,05$$

et

$$0,0001 < x < 0,1.$$

6. Pigment à effets selon l'une ou plusieurs parmi les revendications 1 à 5, **caractérisé en ce que** le pigment présente la structure en couches suivante :

- substrat + $TiO_2$
- substrat + $SnO_2$ + $TiO_2$
- substrat + $TiO_2$ + $SiO_2$ + $TiO_2$
- substrat + $SnO_2$ + $TiO_2$ + $SiO_2$ + $SnO_2$ + $TiO_2$
- substrat + $TiO_2$ + $MgO$ + $TiO_2$
- substrat + $SnO_2$ + $TiO_2$ + $MgO$ + $SnO_2$ + $TiO_2$
- substrat + $TiO_2$ + $CaO$ + $TiO_2$
- substrat + $SnO_2$ + $TiO_2$ + $CaO$ + $SnO_2$ + $TiO_2$
- substrat + $TiO_2$ + $SrO$ + $TiO_2$
- substrat + $SnO_2$ + $TiO_2$ + $SrO$ + $SnO_2$ + $TiO_2$
- substrat + $TiO_2$ + $BaO$ + $TiO_2$
- substrat + $SnO_2$ + $TiO_2$ + $BaO$ + $SnO_2$ + $TiO_2$
- substrat + $TiO_2$ + $ZnO$ + $TiO_2$
- substrat + $SnO_2$ + $TiO_2$ + $ZnO$ + $SnO_2$ + $TiO_2$,

où au moins une couche de $TiO_2$ est dopée au $Ti^{III+}$ et au fluorure.

7. Pigment à effets selon l'une ou plusieurs parmi les revendications 1 à 6, **caractérisé en ce qu'**une ou plusieurs couches de $TiO_2$ du pigment à effets sont en outre dopées au niobium, au zirconium, à l'yttrium, au magnésium, au calcium, au strontium, au baryum, au zinc, à l'indium ou à l'antimoine.

8. Pigment à effets selon l'une des revendications 1 à 7, **caractérisé en ce que** le pigment est en outre pourvu à la surface d'un revêtement organique ou inorganique en tant que couche extérieure.

9. Procédé de préparation du pigment à effets selon l'une ou plusieurs parmi les revendications 1 à 7, **caractérisé en ce qu'**un pigment à effets à base d'un substrat en forme de paillettes comprenant au moins une couche de $TiO_2$ est réagi en présence d'un donneur de fluorure et d'un agent réducteur solide et éventuellement d'un sel fondu dans un mélange de gaz réducteurs à des températures de 700 - 900°C.

10. Procédé selon la revendication 9, **caractérisé en ce que** le donneur de fluorure est choisi dans le groupe constitué par les fluorures inorganiques, les composés organofluorés, les minéraux naturels et synthétiques contenant du fluor.

11. Procédé selon la revendication 9 ou 10, **caractérisé en ce que** l'agent réducteur est choisi dans le groupe constitué par les métaux alcalino-terreux, B, Al, Si, Zn, Fe, LiH, $CaH_2$, $NaBH_4$, MgSi, $MgSi_2$, $Ca_2Si$, $CaSi_2$.

12. Utilisation du pigment à effets selon l'une ou plusieurs parmi les revendications 1 à 8, dans les peintures, les revêtements en poudre, les encres, les plastiques, les films, pour les finitions transparentes aux radars, pour les formulations dissipatives électrostatiques, pour le revêtement de capteurs radar, dans les encres d'imprimerie, dans l'impression de sécurité, dans les éléments de sécurité de documents et de papiers d'identité, pour la coloration de semences, pour la coloration d'aliments ou dans les enrobages de médicaments, pour le marquage laser et pour la préparation de préparations pigmentaires et de préparations sèches, dans des formulations cosmétiques, dans des applications à haute température, dans des préparations pigmentaires.

13. Utilisation du pigment à effets selon l'une ou plusieurs parmi les revendications 1 à 8, en mélange avec des colorants et/ou des pigments organiques ou inorganiques.

14. Utilisation du pigment à effets selon la revendication 13, en mélange avec des pigments d'aluminium.

15. Formulations comprenant le pigment à effets selon l'une ou plusieurs parmi les revendications 1 à 8.

16. Formulations selon la revendication 15, **caractérisées en ce qu'**elles comprennent, outre le pigment à effets selon l'une ou plusieurs parmi les revendications 1 à 8, au moins un constituant choisi dans le groupe constitué par les absorbants, les astringents, les substances antimicrobiennes, les antioxydants, les agents antimousse, les antistatiques, les liants, les additifs biologiques, les agents de blanchiment, les agents chélatants, les désodorisants, les émollients, les émulsifiants, les stabilisants d'émulsion, les colorants, les humectants, les agents filmogènes, les charges, les parfums, les arômes, les insectifuges, les conservateurs, les agents anticorrosion, les huiles cosmétiques, les solvants, les oxydants, les constituants végétaux, les substances tampons, les agents réducteurs, les agents tensioactifs, les gaz propulseurs, les opacifiants, les filtres UV, les absorbeurs d'UV, les agents dénaturants, les régulateurs de viscosité, les parfums, les vitamines, les enzymes, les oligo-éléments, les protéines, les glucides, les pigments organiques, les pigments inorganiques, le noir de carbone, les pigments à effets, les pigments métalliques, les pigments à effets métalliques.

Abbildung 1: Definition der Winkel im Mehrwinkel Spektralphotometer

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9319131 A
- US 4623396 A
- US 3087828 A
- US 3087829 A
- US 3553001 A
- DE 1467468
- DE 1959988
- DE 2009566
- DE 2214545
- DE 2215191
- DE 2244298
- DE 2313331
- DE 2522572
- DE 3137808
- DE 3137809
- DE 3151343
- DE 3151354
- DE 3151355
- DE 3211602
- DE 3235017
- DE 19618568
- EP 0659843 A
- DE 19618569
- EP 0045851 A
- EP 0106235 A
- DE PS2215191 C
- DE OS3151354 A
- DE OS3235017 A
- DE OS3334598 A
- EP 0090259 A
- EP 0634459 A
- WO 9957204 A
- WO 9632446 A
- US 5759255 A
- US 5571851 A
- WO 0192425 A
- EP 0632109 A
- DE 4317019
- DE 3929423
- EP 0492223 A
- EP 0342533 A
- EP 0268918 A
- EP 0141174 A
- EP 0764191 A
- WO 9813426 A
- EP 0465805 A

**In der Beschreibung aufgeführte Nicht-Patentliteratur**

- **J.J. PONJEÉ**. *Philips Technical Review*, vol. 44 (3), 81
- **P.H. HARDING** ; **J.C. BERG, J.** *Adhesion Sci. Technol.*, vol. 11 (4), 471-493
- **R. GLAUSCH** ; **M. KIESER** ; **R. MAISCH** ; **G. PFAFF, J. WEITZEL**. Perlglanzpigmente, Curt R.. Vincentz Verlag, 1996, 83